# EUROPEAN PATENT APPLICATION

(11) **EP 1 973 033 A2**
(43) Date of publication of application: **24.09.2008**
(21) Application number: 08005356.4
(22) Date of filing: 20.03.2008
(51) Int. Cl.: G06F 3/12

(54) **Print control apparatus and computer-readable recording medium storing print control program**

(30) Priority: 22.03.2007 JP 2007075510
(71) Applicant: Brother Kogyo Kabushiki Kaisha, Nagoya-shi, Aichi-ken 467-8561 (JP)
(72) Inventor: Iwanaga, Kazuhiko c/o Intellectual Property Dept., Nagoya-shi Aichi-ken 467-8562 (JP); Ikedo, Tatsuhiro c/o Intellectual Property Dept., Nagoya-shi Aichi-ken 467-8562 (JP)
(74) Representative: Feldmeier, Jürgen

(57) **Abstract**

If a printer ID of a printer (1) currently connected and a printer-sheet ID of a printer sheet loaded in the printer respectively agree with a printer ID and a printer-sheet ID that are set for a sheet to be printed (YES at S401), a print control apparatus (200) generates print data (S403). Then, the print control apparatus (200) appropriately adds cutoff instruction data to the print data based on the setting (S404, S405) and transmits the print data to the printer (1) so that the printer (1) may print the data. Although the printer IDs as well as the printer-sheet IDs do not agree (NO at S401), if it is determined that printing is possible based on the setting (NO at S411, YES at S412), the print control apparatus (200) similarly causes the printer (1) to print data (5403-5406) .

## Description

### BACKGROUND

The present invention relates to a print control apparatus that controls printing operations of a printing apparatus and a computer-readable recording medium that stores a print control program. It relates particularly to a print control apparatus and a recording medium that stores a print control program handling a mismatch in intended and actual types of printing apparatuses or printing media.

Conventionally, such a print control apparatus has been known as to control printing operations of a printing apparatus that prints characters such as letters, symbols, and graphics on a print medium. Such a print control apparatus is capable of setting the size of a printer sheet, i.e. , a print medium, for a document (a data file of texts, etc.) or for each of edit areas referred to as so-called "sheets" that are included in a document and can be independently edited. However, if the size of a printer sheet that is actually loaded in the printing apparatus is different from the size of the preset printer sheet, printing is suspended in each case, or continued on the printer sheet having the different size. Therefore, if printing is suspended, it is necessary for the user to replace the printer sheet each time the size of the printer sheet is changed. On the other hand, if printing is continued with the printer sheet unchanged, printed characters might run off the edge of the printer sheet.

To solve the problem, a print control apparatus has been proposed which allows printing only if the size of a printer sheet loaded in a printing apparatus agrees with a preset size of the printer sheet. For example, in a print control apparatus described in Japanese Patent Application Laid-Open Publication No. 2005-35809, the data of a printer sheet size is set in a printing-conditions file in advance. If it is determined that the size of a printer sheet that is being fed agrees with the preset size of the printer sheet, printing is performed on the fed printer sheet. If not, no printing is performed and the printer sheet is discharged.

In the above-described conventional print control apparatus, it is determined by comparison whether the preset size of the printer sheet in the printing-conditions file agrees with the size of the printer sheet actually loaded in the printing apparatus, only after the printer sheet is fed. Accordingly, a printer sheet having the size that does not agree with the preset size will be discharged without performing printing, even if it has been fed. That is, there is a problem that printer sheet may be wasted. There is another problem that even the printer sheet on which nothing is to be printed will also be fed halfway through the print control apparatus, similar to a printer sheet on which printing is to be performed, thus resulting in a prolonged processing time.

### SUMMARY

The object of the present invention is to provide a print control apparatus that can efficiently perform printing, without wasting printer sheets or a processing time, successively over edit areas on which different types of printer sheets are set and a print control program recorded in a computer-readable recording medium. This object is solved by a print control apparatus according to claim 1 and a computer readable medium according to claim 19. Further advantageous embodiments are subject-matter of the dependent claims.

The print control apparatus is connected to a printing apparatus having a printing device to print characters on a print medium and controls printing operations of the printing apparatus. The print control apparatus includes a print medium setting acquisition device that acquires print medium setting information, the print medium setting information being identification information set for each of a plurality of edit areas and identifying a print medium on which each of the plurality of edit areas is to be printed, the plurality of edit areas constituting a document, and a print control device that controls the printing device to successively print same-setting edit areas, the same-setting edit areas being edit areas for which the print medium setting information acquired by the print medium setting acquisition device is set the same.

The computer-readable recording medium stores a print control program for controlling printing operations of a printing apparatus having a printing device to print characters on a print medium. The program includes instructions for acquiring print medium setting information, the print medium setting information being identification information set for each of a plurality of edit areas and identifying a print medium on which each of the plurality of edit areas is to be printed, the plurality of edit areas constituting a document, and instructions for controlling the printing device to successively print same-setting edit areas, the same-setting edit areas being edit areas for which the acquired print medium setting information is set the same.

### BRIEF DESCRIPTION OF THE DRAWINGS

Exemplary embodiments will be described below in detail with reference to the accompanying drawings in which:

FIG. 1 is an external perspective view of a personal computer (PC) connected to a tape printing apparatus.

FIG. 2 is a block diagram showing an electrical configuration of the PC.

FIG. 3 is an explanatory conceptual diagram of storage areas of a RAM.

FIG. 4 is an explanatory conceptual diagram of storage areas of a hard disk drive (HDD).

FIG. 5 is a partial side view showing an internal structure of the tape printing apparatus in with a cover open.

FIG. 6 is a block diagram showing an electrical configuration of the tape printing apparatus.

FIG. 7 is a flowchart of data editing processing.

FIG. 8 is a schematic illustration of an edit screen displayed on a monitor.

FIG. 9 is a schematic illustration of a printer setting screen.

FIG. 10 is a schematic illustration of a printer sheet setting screen.

FIG. 11 is a schematic illustration of a print setting screen.

FIG. 12 is a flowchart of print control processing.

FIG. 13 is a flowchart of print data generation processing.

FIG. 14 is an explanatory table showing setting of a printer sheet and a printer for each of five sheets.

FIG. 15 is an explanatory diagram of a result of printing on a tape having a width of 20mm.

FIG. 16 is an explanatory diagram of a result of printing on a tape having a width of 30mm.

### DETAILED DESCRIPTION OF THE EXEMPLARY EMBODIMENTS

The following will describe one embodiment that employs a personal computer (hereinafter abbreviated as PC) 200 connected to a tape printing apparatus 1, with reference to the drawings. The drawings will be used only to describe technological features that can be employed in the present invention. The configurations of apparatuses and the flowcharts of various types of processing that are described in the drawings are just explanatory examples and not intended to be restrictive, otherwise specified.

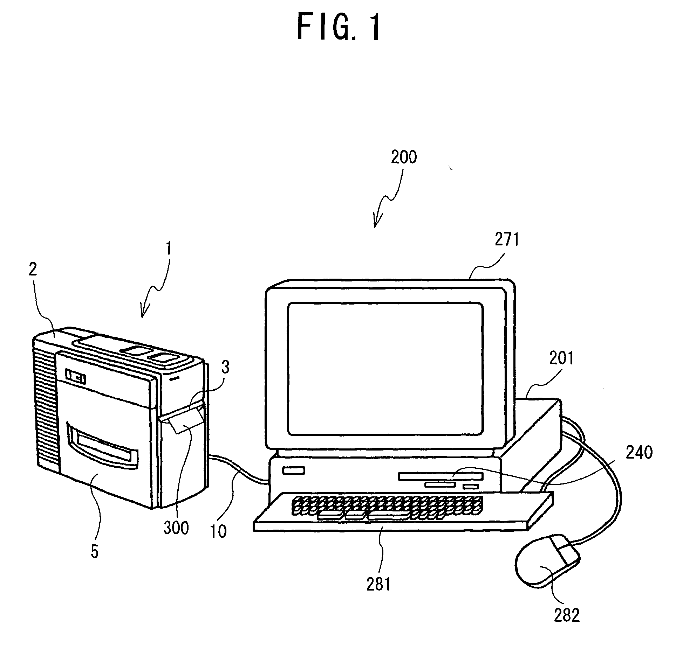

The physical configurations of the PC 200 and the tape printing apparatus 1 will be outlined below with reference to FIG. 1. As shown in FIG. 1, the PC 200 is connected to the tape printing apparatus 1, for example, through a USB cable 10 complying with the USB standards, so that it may transmit or receive data to or from the tape printing apparatus 1 through the USB cable 10. As described in detail later, if the user uses the PC 200 to, for example, edit a print target or set conditions for printing by the tape printing apparatus 1, the PC 200 generates print data based on a result of the edition and the preset conditions, and transmits the generated print data to the tape printing apparatus 1 through the USB cable 10. The tape printing apparatus 1 then performs printing in accordance with the print data that it has received.

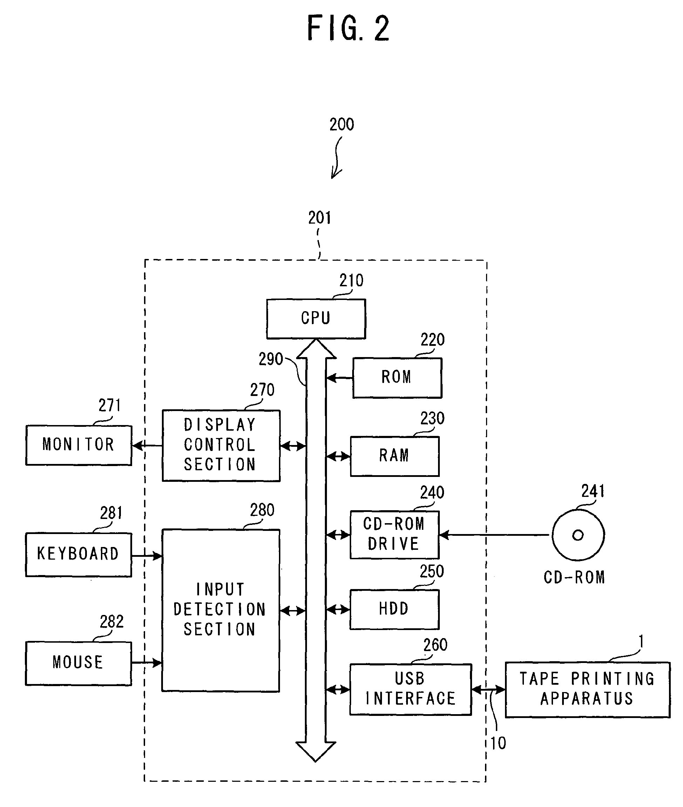

The PC 200 shown in FIG. 1 is a known type of personal computer and includes a body 201, a monitor 271, a keyboard 281, and a mouse 282. The monitor 271, the keyboard 281, and the mouse 282 are respectively connected to the body 201 through a connection cable. On the front surface of the body 201, a CD-ROM drive 240 is provided, into which a CD-ROM 241 can be inserted (see FIG. 2).

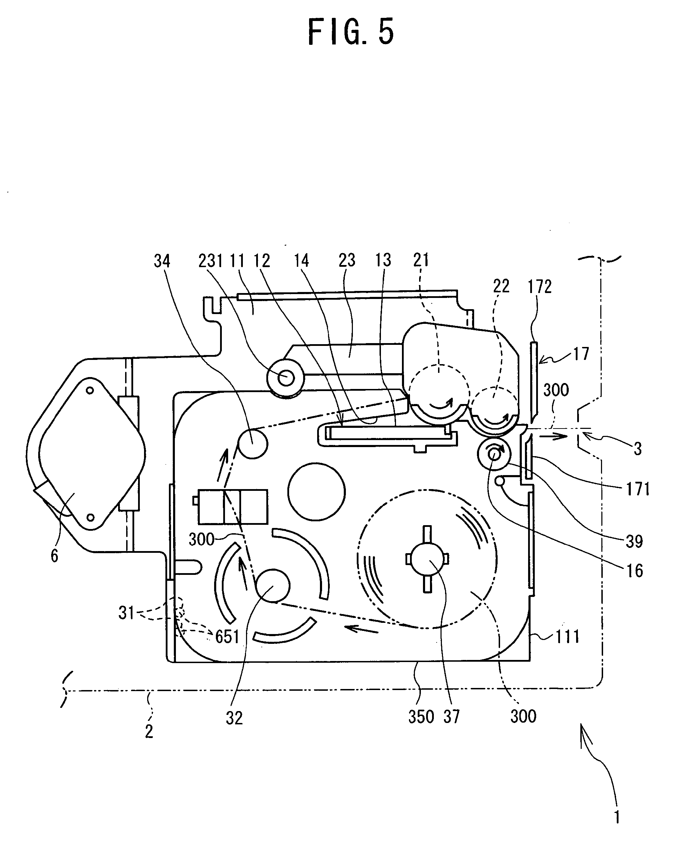

The tape printing apparatus 1 shown in FIG. 1 is equipped with a roughly rectangular parallelepiped casing 2. The front surface (rightward surface toward the user in FIG. 1) of the casing 2 has a tape discharge outlet 3. When a cover 5 fitted on the left side surface of the casing 2 is opened, the user will see a cassette loading frame 11 (see FIG. 5) provided inside the casing 2. The cassette loading frame 11 is configured so that a cassette 350 (see FIG. 5), which will be described later, can be loaded into the cassette loading frame 11. The internal structure of the tape printing apparatus 1 will be described later.

The electrical configuration of the PC 200 will be described below with reference to FIGS. 2-4. As shown in FIG. 2, the PC 200 includes a CPU 210 that controls the PC 200. A ROM 220, a RAM 230, the CD-ROM drive 240, a hard disk drive (HDD) 250, a USB interface 260, a display control section 270, and an input detection section 280 are connected to the CPU 210 through a bus 290.

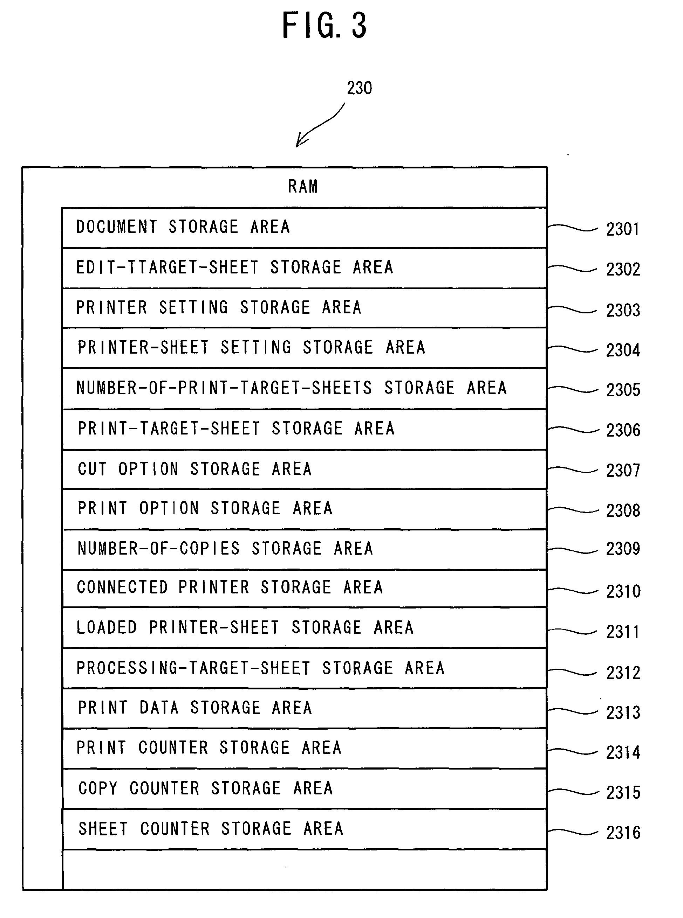

The ROM 220 is a read only memory that stores programs, including BIOS, to be executed by the CPU 210. The RAM 230 is a read/write random access memory that stores data temporarily. As shown in FIG. 3, the RAM 230 has various storage areas including a document storage area 2301, an edit-target-sheet storage area 2302, a printer setting storage area 2303, a printer-sheet setting storage area 2304, a number-of-print-sheets storage area 2305, a print-target-sheet storage area 2306, a cut option storage area 2307, a print option storage area 2308, a number-of-copies storage area 2309, a connected printer storage area 2310, a loaded printer sheet storage area 2311, a processing-target-sheet storage area 2312, a print data storage area 2313, a print counter storage area 2314, a copy counter storage area 2315, and a sheet counter storage area 2316 .

The document storage area 2301 stores a document that is subjected to data edition or printing. The "document" herein refers to data stored as one aggregate (data file). The data contained in a document may be, for example, but not limited to, letters, symbols, graphics, and images. One document is composed of at least one edit area called as a "sheet". The user can edit, or set printing conditions, etc. independently on each of the edit areas/sheets. The number of sheets that compose a document may be one or more. The edit-target-sheet storage area 2302 stores an edit target sheet. The edit target sheet is a target sheet on which data is edited or printing conditions are set. The printer setting storage area 2303 stores printer identification information (hereinafter referred to as printer ID) of an output-destination printer. The printer ID can be set for each of sheets that compose a document. The printer-sheet setting storage area 2304 stores identification information of a printer sheet on which sheets are to be printed (hereinafter referred to as printer-sheet ID) . The printer-sheet ID can be set for each of sheets that compose a document. The number-of-print-target-sheets storage area 2305 stores the number of print target sheets. The print target sheet is a sheet subjected to printing among the sheets that compose a document. The print-target-sheet storage area 2306 stores a print target sheet. The cut option storage area 2307 stores cut option information. The cut option information is information that specifies whether a tape should be cut after printing and how the tape should be cut if it is specified to cut the tape, if printing is performed on the tape. The print option storage area 2308 stores print option information. The print option information includes information that specifies a printer ID and a printer-sheet ID that are set to a sheet and information that specifies whether to continue printing if a connected printer ID and a loaded printer-sheet ID do not agree. The connected printer ID and the loaded printer-sheet ID will be described later. The number-of-copies storage area 2309 stores the number of copies to be printed. The cut option information, the print option information, and the number of copies are each set as one of the print setting conditions as described later.

The connected printer storage area 2310 stores a connected printer ID. The connected printer ID is the printer ID of a printer that is currently connected to the PC 200 and designated as an output-destination printer. The loaded printer-sheet storage area 2311 stores a loaded printer-sheet ID. The loaded printer-sheet ID is the printer-sheet ID of a printer sheet loaded in the currently connected printer. The processing-target-sheet storage area 2312 stores information about a processing target sheet. The processing target sheet is a sheet that is currently subjected to print control processing. Specifically, as the information about the processing target sheet, data of characters (e.g. letters, symbols, or graphics) to be printed in the processing target sheet, the printer ID of the output-destination printer and the printer-sheet ID of the printer sheet to be used set for the processing target sheet, for example, are stored in the processing target sheet storage area 2313. The print data storage area 2313 stores print data to be used to control printing operations of the tape printing apparatus 1. The print data includes a printing dot pattern for printing the characters on a label tape 300, the number of pulses to be applied, the cutoff setting for the label tape 300, etc.

The print counter storage area 2314 stores a print counter. The print counter is used to count the total number of times of printing performed so far in print control processing, which will be described later. The copy counter storage area 2315 stores a copy counter. The copy counter is used to count the number of copes printed so far in the print control processing. The sheet counter storage area 2316 stores a sheet counter. The sheet counter is used to count the print target sheets sequentially in the print control processing.

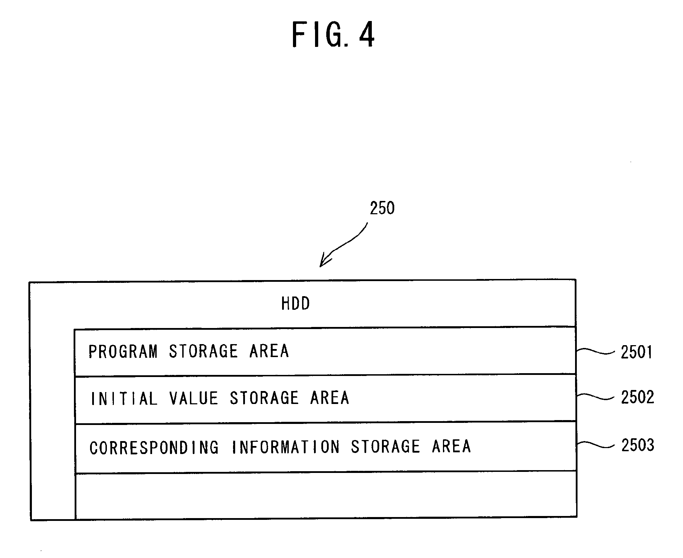

When the CD-ROM 241 storing data is inserted into the CD-ROM drive 240, the CD-ROM drive 240 reads the data from the CD-ROM 241. The HDD 250, which is a storage device, has various storage areas including a program storage area 2501, an initial value storage area 2502, a corresponding information storage area 2503, etc. as shown in FIG. 4. The program storage area 2501 stores various programs including a program used to edit data of a document in the PC 200 and a program used to control printing operations of the tape printing apparatus 1. The initial value storage area 2502 stores various default values. The default values are set as initial values at the time of print setting. The corresponding information storage area 2503 stores a usable-size printer-sheet ID for each printer-sheet ID. The usable-size printer-sheet ID is a printer-sheet ID of a printer sheet that has a different size from a printer sheet having the corresponding printer-sheet ID, but is still usable for printing in place of the printer sheet having the corresponding printer-sheet ID. For example, corresponding to the printer-sheet ID of an 18mm-wide tape, the printer-sheet ID of a 24mm-wide tape may be stored as the usable-size printer-sheet ID. Programs for data editing processing and print control processing, which will be described later, settings and data to be used to execute those programs can be stored in advance in a recording medium such as the CD-ROM 241, a flexible disk, and a MO and then read and stored into the HDD 250. Those programs, settings, data, etc. may as well be acquired from any other terminal than the PC 200, which is connected via a network.

The USB interface 260 is used to establish communication with an external device such as the tape printing apparatus 1. The monitor 271 is connected to the display control section 270. The monitor 271 displays an operation screen viewed by the user. The display control section 270 performs screen display processing on the monitor 271. The keyboard 281 and the mouse 282 that are used by the user to enter various instructions are connected to the input detection section 280. The input detection section 280 detects entry through the keyboard 281 or the mouse 282.

The internal structure of the tape printing apparatus 1 will be described below with reference to FIG. 5. In the following description, the up-and-down directions and the right-and-left directions of the page of FIG. 5 will be referred to as the up-and-down directions and the right -and-left directions of the tape printing apparatus 1 and the tape cassette 350.

As shown in FIG. 5, the cassette loading frame 11 having a concave portion 111 is provided in the tape printing apparatus 1. The tape cassette 350, which will be described later, can be attached to and detached from the concave portion 111. FIG. 5 shows the cassette loading frame 11 in a condition where the tape cassette 350 is attached. Above the concave portion 111 in the cassette loading frame 11, a roller holder 23 is disposed to be swingable around a shaft 231. At the lower side of the roller holder 23, a platen roller 21 and a pressure roller 22 are rotatably supported. The platen roller 21 and the pressure roller 22 are disposed to face the tape cassette 350 fitted into the concave portion 111. When the tape cassette 350 is fitted into the concave portion 111, the roller holder 23 can be positioned to a release position where the platen roller 21 and the pressure roller 22 are at the uppermost position. When printing starts, the roller holder 23 is swung around the shaft 231, to place the platen roller 21 and the pressure roller 22 down to a print position where the platen roller 21 and the pressure roller 22 are at the lowest position.

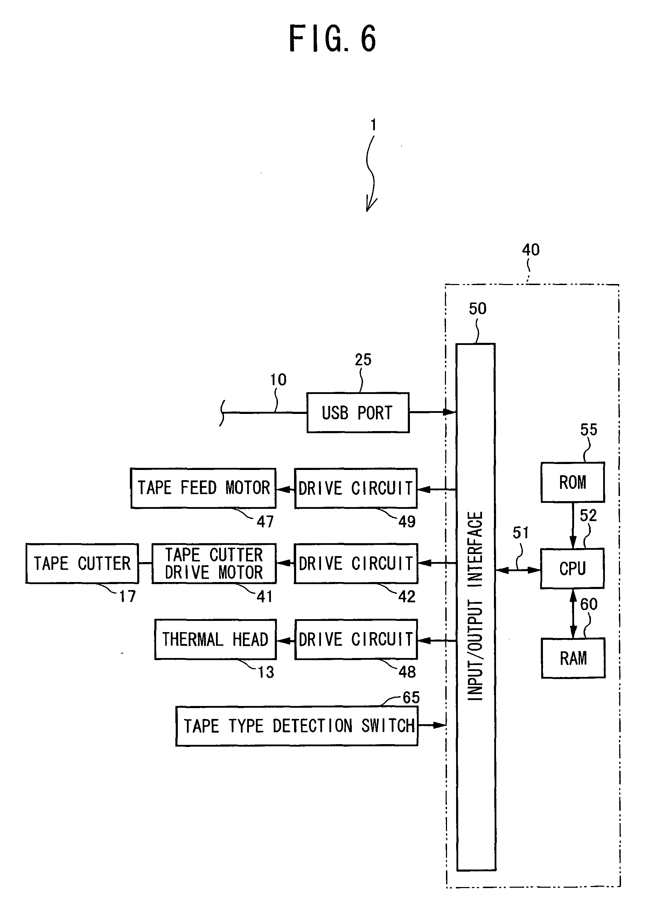

In the upper part of the concave portion 111 in the cassette loading frame 11, a plate 12 is erected perpendicularly from the bottom of the concave portion 111 (perpendicularly with respect to the paper surface). On a side surface of the plate 12 that faces the platen roller 21, a thermal head 13 is disposed. The thermal head 13 performs printing on the label tape 300. At a position of the concave portion 111 that faces the pressure roller 22, a tape feed roller shaft 16 is erected perpendicularly from the bottom of the concave portion 111. As shown in FIG. 5, if the tape cassette 350 is loaded into the concave portion 111, the tape feed roller shaft 16 is interlocked with a tape feed roller 39 of the tape cassette 350. The tape feed roller shaft 16 is driven rotationally by the driving force of a tape feed motor 47 (see FIG. 6), thereby rotating the tape feed roller 39. The tape feed motor 47 will be described later.

At the upper right of the concave portion 111 in the cassette loading frame 11 and near the tape discharge outlet 3, a tape cutter 17 is disposed. The tape cutter 17 has a fixed blade 171 and a movable blade 172. The label tape 300 is cut off as the movable blade 172 is swung with respect to the fixed blade 171 by a tape cutter drive motor 41 (see FIG. 6), which will be described later.

At the lower left corner of the concave portion 111, a tape-type detection switch 65 (see FIG. 6) is provided. The tape-type detection switch 65 includes a detection sensor board and four plungers 651. The plungers 651 protrude from the detection sensor board as the plungers 651 are respectively urged by a spring. The tape-type detection switch 65 can detect the type of the tape cassette 350 loaded in the concave portion 111 in combination with identification holes 31 formed in the tape cassette 350. The identification holes 31 will be described later. In the present embodiment, the tape width of the label tape 300 can be detected as the type of the tape cassette 350.

At the left of the cassette loading frame 11, a DC motor 6 is mounted. The DC motor 6 is a driving source for feeding the label tape 300. The rotary-drive force of the DC motor 6 is transmitted via an appropriate transmission mechanism to the platen roller 21, the pressure roller 22, and the tape feed roller shaft 16 to be rotated, respectively.

The tape cassette 350 that can be loaded into the tape printing apparatus 1 will be described below. The tape cassette 350 is formed into a roughly rectangular parallelepiped by assembling an upper case and a lower case together. The lower case houses the component members of the tape cassette 350. As shown in FIG. 5, at the top of the tape cassette 350, a recessed head loading portion 14 is formed. The plate 12 having the thermal head 13 is placed into the head loading portion 14, when the tape cassette 350 is loaded into the concave portion 111 in the cassette loading frame 11.

Three spools, i.e., a first spool 37, a second spool 32, and a third spool 34 are rotatably disposed in the lower case of the tape cassette 350. The label tape 300 is wound around the first spool 37. The label tape 300 has a double-layered structure with a print tape and a separation tape. The characters can be printed on one of the surfaces of the print tape. The release tape is stuck to the other surface of the print tape via an adhesive layer. The second spool 32 and the third spool 34 play the role as guide rollers that guide the label tape 300 as the label tape 300 is fed through the tape cassette 350.

At the upper right portion in the lower case of the tape cassette 350, the tape feed roller 39 is rotatably disposed. If the tape cassette 350 is loaded into the concave portion 111 in the cassette loading frame 11, the tape feed roller 39 is interlocked with the aforementioned tape feed roller shaft 16. As the tape feed roller shaft 16 is rotationally driven, the tape feed roller 39 rotates.

The identification holes 31 for identifying the type of the tape cassette 350 are formed at the lower left corner of the lower case of the tape cassette 350. The formation pattern of the identification holes 31 depends on the type of a tape mounted in the tape cassette 350. In the tape cassette 350 illustrated by an example in FIG. 5, two identification holes 31 are formed in a vertical pattern. The above-described tape-type detection switch 65 is disposed at a position of the concave portion 111 in the cassette loading frame 11 where the identification holes 31 are placed when the tape cassette 350 is loaded. Into each of the identification holes 31, one of the four plungers 651 of the tape-type detection switch 65 disposed to the corresponding position is inserted. In the case of the tape cassette 350 shown in FIG. 5, two of the four plungers 651 are inserted into the identification holes 31, thus resulting in the OFF state. The other two plungers 651 (not shown) that face positions where the identification holes 31 are not formed are pressed in by the bottom of the lower case of the tape cassette 350, thus resulting in the ON state. In such a manner, the type of the tape cassette 350 can be detected based on the combination of the ON/OFF signals from the four plungers 651. In the present embodiment, the identification holes 31 and the tape-type detection switch 65 are used to detect the tape width of the label tape 300 mounted in the tape cassette 350.

The electrical configuration of the tape printing apparatus 1 will be described below with reference to FIG. 6. As shown in FIG. 6, a control section 40 of the tape printing apparatus 1 has a CPU 52 as its nucleus. A ROM 55, a RAM 60, and an input/output interface 50 are connected to the CPU 52.

The CPU 52 controls the entirety of the tape printing apparatus 1 by reading appropriate programs stored in the ROM 55 in advance and executing various processing according to the programs. The ROM 55 stores a variety of programs necessary for controlling the tape printing apparatus 1, such as a printing performance program. Based on print data, the printing performance program drives the thermal head 13, the tape feed motor 47, and the tape cutter drive motor 41. The print data can be generated in the PC 200 and transmitted to the tape printing apparatus 1 via the USB cable 10 when printing is performed. The RAM 60 has a plurality of storage areas to store data used in various kinds of processing temporarily.

Drive circuits 48, 42, and 49, a USB port 25, and the aforementioned tape-type detection switch 65 are connected to the input/output interface 50. The drive circuit 48 drives the thermal head 13. The drive circuit 42 drives the tape cutter drive motor 41, which operates the tape cutter 17. The drive circuit 49 drives the tape feed motor 47. The USB port 25 is used to connect the tape printing apparatus 1 to the PC 200 via the USB cable 10.

The printing operations of the tape printing apparatus 1 having the above-described configuration will be described below with reference to FIG. 5. As shown in FIG. 5, after the tape cassette 350 is loaded into the tape printing apparatus 1, when it is instructed to perform printing based on the print data transmitted from the PC 200 as described later, the roller holder 23 is swung to be the print position. Thus, the platen roller 21 and the pressure roller 22 are pressed against the thermal head 13 and the tape feed roller 39, respectively. The label tape 300 is then sandwiched between the platen roller 21 and the thermal head 13 and between the pressure roller 22 and the tape feed roller 39. If the DC motor 6 is driven, the driving force of the DC Motor 6 is transmitted via the transmission mechanism, and causes each of the platen roller 21, the pressure roller 22, and the tape feed roller 39 to rotate. The label tape 300 is pulled out from the first spool 37 and fed via the second spool 32 and the third spool 34 so that characters may be printed by the thermal head 13 on the surface of the print tape. The label tape 300 passes through between the pressure roller 22 and the tape feed roller 39 and then may be cut off by the tape cutter 17 when necessary. After that, the label tape 300 is discharged from the tape discharge outlet 3 to the outside of the tape printing apparatus 1.

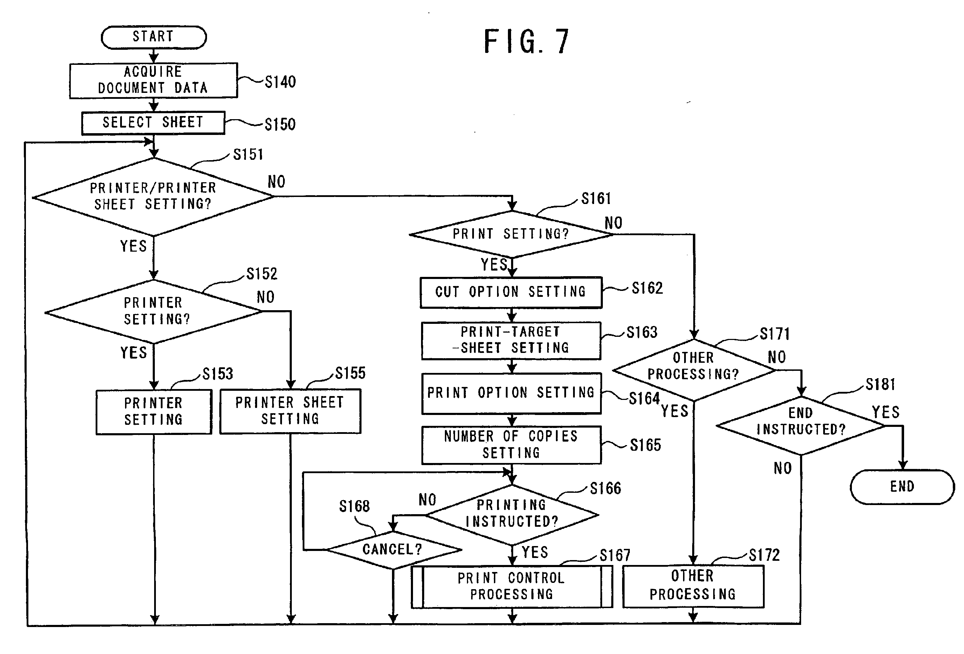

Processing that is performed in the PC 200 in order to cause the tape printing apparatus 1 to perform printing operations will be described below with reference to FIGS. 7-11. First, data editing processing performed in the PC 200 will be described below with reference to FIG. 7. The CPU 210 executes the data editing processing shown in FIG. 7 in accordance with a program stored in the program storage area 2501 of the HDD 250.

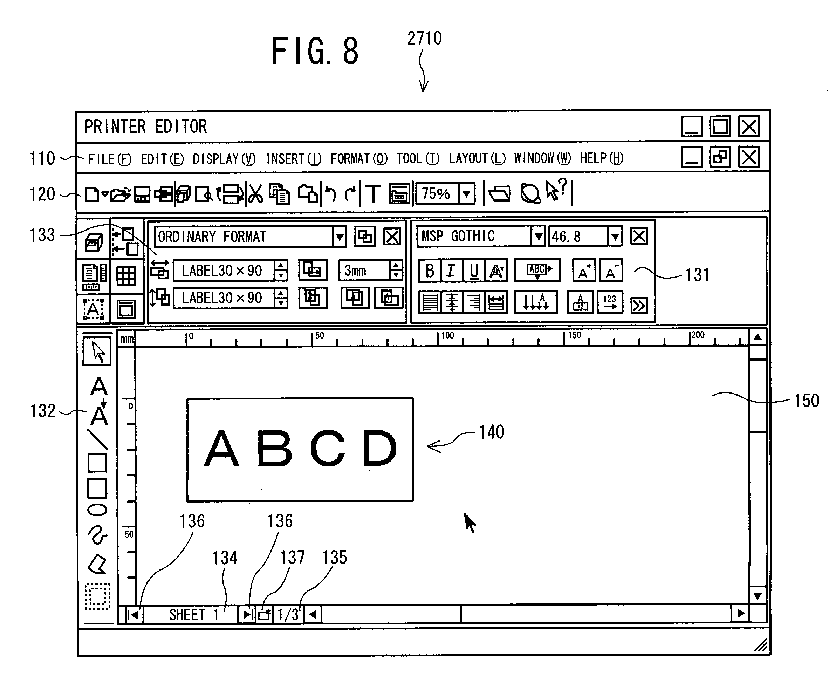

A variety of screens that may be displayed on the monitor 271 during the data editing processing shown in FIG. 7 will be described below. An edit screen 2710 shown in FIG. 8 appears when the data editing processing shown in FIG. 7 starts upon the activation of the program. The user can enter data and instructions for editing or setting, using the keyboard 281 or the mouse 282 while watching the edit screen 2710. As shown in FIG. 8, the edit screen 2710 has a menu bar 110 and a tool bar 120 for instructing various operations at its upper part. The edit screen 2710 has a work area 150 in its lower half, where characters to be printed by the tape printing apparatus 1 are displayed. In the work area 150, a sheet 140 that is currently edited is displayed. Around the work area 150, an entry tool box 132, a page property tool box 133, and a text property tool box 131 are provided. In the entry tool box 132, the user can specify a tool (letter, line, rectangle, curve, etc.) to be entered in the work area 150. In the page property tool box 133, the user can select or specify settings of the label tape 300. In the text property tool box 131, the user can specify detailed settings of the entry of a text to be performed in the sheet 140. At the lower left corner of the work area 150, an edit target sheet display field 134 and a number-of-sheets display field 135 are provided. The edit target sheet display field 134 displays the name of a sheet that is currently edited, i.e., the edit target sheet. The number-of-sheets display field 135 displays a total number of sheets that constitute a document that is currently edited and a sheet number of the edit target sheet. In the example of the edit screen 2710 shown in FIG. 8, "sheet 1" is displayed in the edit target sheet display field 134 and "1/3" is displayed in the number-of-sheets display field 135. Accordingly, it is indicated that the currently edited document is composed of three sheets and the edit sheet is the first one of the three sheets, i.e., "sheet 1". At each of the right and left ends of the edit target sheet display field 134, a sheet change button136 is provided. By clicking the mouse 282 at the sheet change buttons 136, the user can change an edit target sheet displayed in the work area 150. To the left of the number-of-sheets display field 135, a new sheet generation button 137 is provided. A new sheet is inserted each time the user clicks the mouse 282 at the new sheet generation button 137 once.

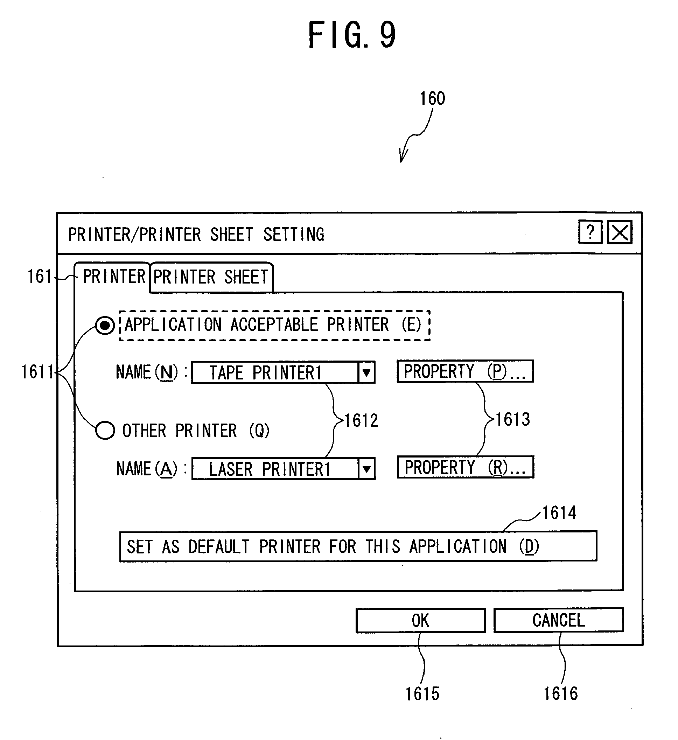

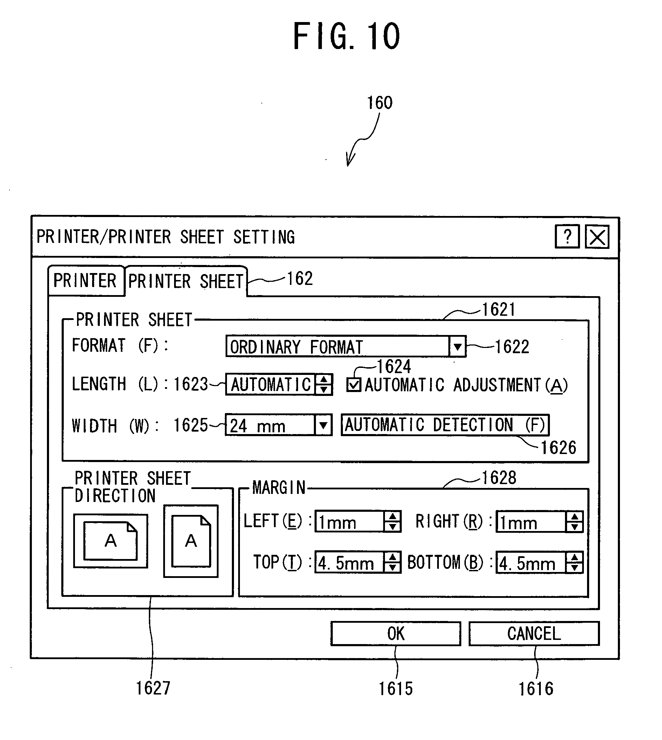

A printer/printer sheet setting screen 160 shown in FIGS. 9 and 10 appears when the user selects a "FILE" menu and then an item "PRINTER/PRINTER SHEET SETTING" from the "FILE" menu. The file menu is displayed in the menu bar 110 on the edit screen 2710. "printer/printer sheet setting" is one of a plurality of items that are displayed in the "FILE" menu. The printer/printer sheet setting screen 160 can be used to set a printer to which the print data is output (output-destination printer) and the size of a printer sheet for a sheet currently selected as the edit target sheet. Thus, the user can independently set the output destination printer and the size of the printer sheet for each of the sheets that constitute one document. The user can switch between a printer setting screen 161 shown in FIG. 9 and a printer sheet setting screen 162 shown in FIG. 10 by manipulating the mouse 282 to select "PRINTER" or "PRINTER SHEET" displayed at the upper part of the printer/printer sheet setting screen 160. At the lower part of the printer/printer sheet setting screen 160, an OK button 1615 and a cancel button 1616 are provided. When the OK button 1615 is selected, the settings displayed on the printer/printer sheet setting screen 160 are finalized. If the cancel button 1616 is selected, the settings before the printer/printer sheet setting screen 160 is displayed are maintained.

As shown in FIG. 9, the printer setting screen 161 has printer type selection buttons 1611, printer specification list boxes 1612, property buttons 1613, and a default printer setting button 1614. The printer type selection buttons 1611 can be used to select the type of the output-destination printer. More specifically, the user can select whether to use a printer for printing on a tape (i.e., tape printer), such as the tape printing apparatus 1, or to use any other printer for printing. The printer specification list boxes 1612 can be used to identify one output-destination printer out of several printers of the selected type. The property buttons 1613 can be used to shift to a details setting screen (not shown) of the printer selected in the printer specification list box 1612. The default printer setting button 1614 can be used to specify the selected printer as an ordinary output-destination printer (default printer) unless otherwise specified.

The printer sheet setting screen 162 shown in FIG. 10 has a printer sheet size setting box 1621, a printer sheet direction setting box 1627, and a margin setting box 1628. The printer sheet direction box 1627 can be used to set the direction/orientation of a printer sheet. The margin setting box 1628 can be used to set each of right and left margins and upper and lower margins of a printer sheet. If a tape printer such as the tape printing apparatus 1 is specified on the printer setting screen 161 as the output destination, the printer sheet size setting box 1621 displays therein a format list box 1622, a length setting list box 1623, and a width setting list box 1625. The format list box 1622 can be used to set a format (layout) of a printer sheet. The length setting list box 1623 can be used to set a length of the tape in the case of printing on a tape. The width setting list box 1625 can be used to set a tape width. If the default printer is specified as the output destination on the printer setting screen 161, a printer sheet size list box (not shown) is displayed. The printer sheet size list box displays therein printer sheet sizes such as A4, B4, and A3. The user can select "ORINDARY FORMAT" or any one of various prescribed formats by using the format list box 1622. If "ORDINARY FORMAT" is selected, the user can set a tape length or width arbitrarily. If any one of the other prescribed formats is selected, the size of the sheet 140 is set automatically in such a manner as to match the size of a CD or the case of a video tape, for example. To the right side of the length setting list box 1623, an automatic adjustment check box 1624 is provided. If the user marks the automatic adjustment check box 1624, the tape length is automatically adjusted in such a manner as to match the length of contents to be printed on the sheet and then set. To the right side of the width setting list box 1625, an automatic detection button 1626 is provided. If the user selects the automatic detection button 1626, the tape width of the label tape 300 is set automatically. As described above, the tape width of the label tape 300 can be detected by the tape-type detection switch 65 of the tape printing apparatus 1.

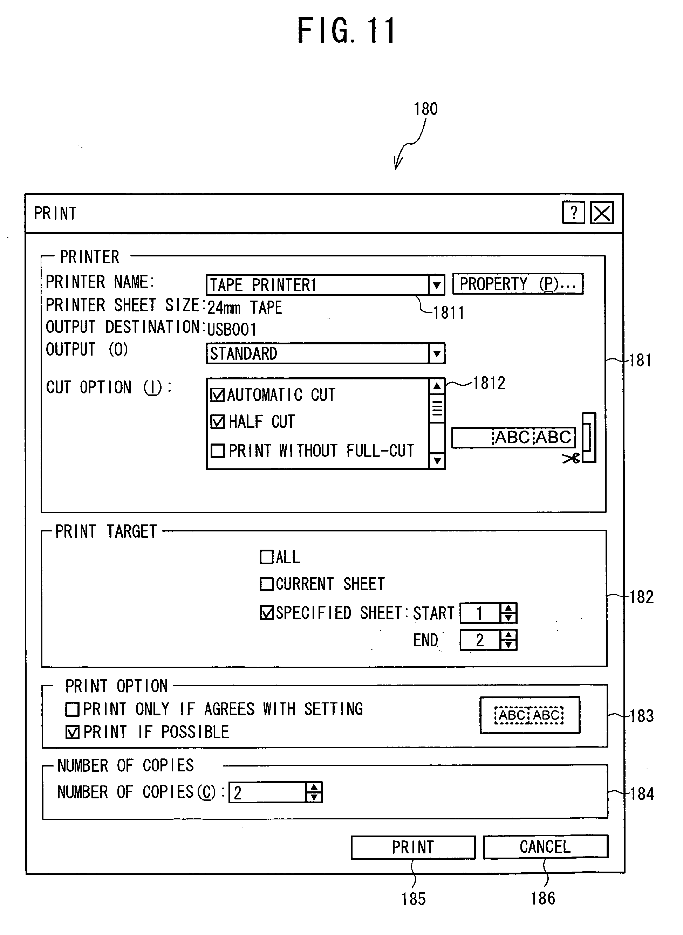

A print setting screen 180 shown in FIG. 11 will be described below with reference to FIG. 11. The print setting screen 180 appears when the user selects a "FILE" menu and further selects "PRINT" from among a plurality of items displayed in the "FILE" menu. The print setting screen 180 can be used to specify the connected printer, a tape cutoff method, a print target, and the like, and then to instruct printing. As shown in FIG. 11, the print setting screen 180 has a printer setting box 181, a print target setting box 182, a print option setting box 183, and a number-of-copies setting box 184. At the lower part of the print setting screen 180, a print button 185 and a cancel button 186 are provided. The print button 185 can be used to finalize displayed settings and instruct printing. The cancel button 186 can be used to maintain the settings before the print setting screen1 180 is displayed, without performing printing.

The printer setting box 181 displays a connected printer list box 1811, the size of a printer sheet currently loaded in a currently connected printer and the like. The connected printer list box 1811 displays a currently connected printer. The connected printer list box 1811 can be used by the user to switch the connected printer to any other printer. The example of FIG. 11 shows that "TAPE PRINTER1" loaded with a tape cassette 350 having a 24-mm wide tape is currently connected to the PC 200.

If a tape printer such as the tape printing apparatus 1 is designated as the connected printer in the connected printer list box 1811, a cut option list box 1812 appears in the printer setting box 181 as shown in FIG. 11. In the case of a tape printer such as the tape printing apparatus 1, if a document is composed of a plurality of sheets, printing will be successively performed on the sheets sequentially in a direction in which a tape is fed. The cut option list box 1812 can be used to select whether or not to cut a tape at the end of each sheet with, for example, the tape cutter 17 (see FIG. 5), a method of cutoff, and the like. Specifically, the cut option list box 1812 displays "AUTOMATIC CUT", "HALF CUT", "PRINT WITHOUT FULL-CUT", etc. "AUTOMATIC CUT" is a method of completely cutting off (full-cutting) the tape between sheets (at the end of each sheet) on which printing is successively performed, and further full-cutting the tape when printing of one document is finished. Therefore, as described later, if the number of copies is set to at least two, each time printing of one copy of a document is finished, the tape will be full-cut. "HALF CUT" is a method of cutting off only a print tape of a double-layered tape (half-cutting) such as the above-described label tape 300 between sheets which are successively printed. "PRINT WITHOUT FULL-CUT" is a method of not performing full-cutting between sheets nor after printing a document. It is possible to select more than one of those options at a time. For example, as shown in FIG. 11, if "AUTOMATIC CUT" and "HALF CUT" are selected at the same time for a document composed of three sheets, "HALF CUT" is performed preferentially between the sheets. Therefore, the tape is half-cut at two positions between sheets among the three sheets, and full-cut at the end of the third sheet, that is, when printing of a document as a whole is completed. If "HALF CUT" and "PRINT WITHOUT FULL-CUT" are selected at the same time for the same document, the tape is half-cut at two positions between sheets among the three sheets. Further, the printing is ended without performing cutting off at all at the end of the third sheet, that is, when printing of a document as a whole is completed.

The print target setting box 182 can be used to specify which of at least one sheet that constitutes a document is to be printed as a target sheet. The print target setting box 182 has three check boxes of "ALL", "CURRENTLY EDITED SHEET", and "SPECIFIED SHEET". The user can select one of those check boxes to select to print all of the sheets, to print only the currently edited sheet (edit target sheet), or to print at least one sheet specified by a sheet number. In the example shown in FIG. 11, for a document composed of three sheets, for example, it is specified to print the sheets having sheet numbers 1 and 2 on the tape.

The print option setting box 183 can be used to specify whether or not to perform printing if the output-destination printer and the printer sheet size set for each of sheets that constitute a document are different from the currently connected printer and the size of the printer sheet loaded in the currently connected printer displayed in the printer setting box 181. For example, even if the output-destination printer set for the sheet is "TAPE PRINTER1" and the currently connected printer is "TAPE PRINTER 2" of the same type, printing can still be performed although they do not agree. Similarly, even if the printer sheet size set for the sheet corresponds to a tape cassette having a 12mm-wide tape and a tape cassette loaded in the currently connected printer has a 24mm-wide tape, printing can still be performed although they do not agree. Assuming such cases, the print option setting box 183 has two check boxes of "PRINT ONLY IF AGREE WITH SETTING" and "PRINT IF POSSIBLE". If "PRINT ONLY IF AGREE WITH SETTING" is selected, printing will not be performed unless the output-destination printer and the printer sheet size set for the sheet both agree with the currently connected printer and the size of the printer sheet loaded in the currently connected printer, respectively. If "PRINT IF POSSIBLE" is selected as in the example of FIG. 11, printing will be performed even if either one of them does not agree, as far as it is possible.

The number-of-copies setting box 184 can be used to set the number of copies of a document to be printed. For example, if only first and second sheets of three sheets are selected as print targets in the print target setting box 182 and the number of copies of 2 is specified in the number-of-copies setting box 184 as in the case of FIG. 11, two copies of each of the first and second sheets will be printed alternately.

Next, the data editing processing that is performed by the CPU 210 of the PC 200 will be described below with reference to FIG. 7. When the processing is started, first the CPU 210 acquires data of a document to be edited or printed and stores the acquired data into the document storage area 2301 of the RAM 230 (S140). The acquired data of the document may have been generated and stored in advance in a storage device such as the HDD 250 and then read. Alternatively, the data of the document may be newly generated. Next, the CPU 210 selects the data of an edit target sheet out of the document data stored in the document storage area 2301 and stores the data of the edit target sheet into the edit-target-sheet storage area 2302 (S150). Specifically, in the case of a newly generated document, the CPU 210 selects the first sheet in the document. In the case of an existing document, the CPU 210 selects a sheet that was edited finally in the previous editing processing. At this time, the above-described edit screen 2710 (see FIG. 8) is displayed on the monitor 271. After selecting the sheet (S150), the CPU 210 then determines whether "PRINTER/PRINTER SHEET SETTING" is selected in the menu by manipulating the mouse 282 (S151) . If it is determined that "PRINTER/PRINTER SHEET SETTING" is selected (YES at s151), the CPU 210 further determines whether "PRINTER SETTING" is selected (S152). Specifically, if the printer setting screen 161 (see FIG. 9) is selected on the printer/printer sheet setting screen 160 currently displayed on the monitor 271, it is determined that "PRINTER SETTING" is selected (YES at S152). In such a case, settings of a printer are specified in accordance with an instruction entered from the above-described printer setting screen 161 by the user by manipulating the mouse 282 (S153). The CPU 210 associates the sheet number of the edit target sheet with the printer ID of a printer set as the output-destination printer, and stores the associated sheet number and the printer ID into the printer setting storage area 2303 of the RAM 230. If the mouse 282 is clicked on the OK button 1615 or the cancel button 1616, the CPU 210 ends the printer setting and returns to the determination as to whether it is instructed to specify settings of the printer or the printer sheet (S151).

If the printer sheet setting screen 162 (see FIG. 10) rather than the printer setting screen 161 is selected on the printer/printer sheet setting screen 160 (NO at S152), settings of a printer sheet are specified in accordance with an instruction by the user manipulating the mouse 282 on the printer sheet setting screen 162 (S155). The CPU 210 associates the sheet number of the edit target sheet with the printer-sheet ID of the set printer sheet, and stores the associated sheet number and the printer-sheet ID into the printer-sheet setting storage area 2304 of the RAM 230. Similar to the case of printer setting (S153), if the mouse 282 is clicked on the OK button 1615 or the cancel button 1616, the CPU 210 ends the printer sheet setting and returns to the determination as to whether it is instructed to specify the settings of the printer or the printer sheet (S151).

After selecting the sheet (S150), if "PRINTER/PRINTER SHEET SETTING" is not selected (NO at S151) but "PRINT" is selected in the menu (YES at S161), the aforementioned print setting screen 180 (see FIG. 11) is displayed on the monitor 271. The cut option information is set by selecting any one of the cut options in the cut option list box 1812 in the printer setting box 181, and is stored into the cut option storage area 2307 of the RAM 230 (S162). Specifically, in the example of FIG. 11, data that corresponds to "AUTOMATIC CUT" and "HALF CUT" is stored. Next, data of at least one sheet set by selecting any one of the check boxes in the print target setting box 182 is stored into the print-target-sheet storage area 2306 as the data of the print target sheet. In addition, the number of the print target sheets is stored into the number-of-print-target-sheets storage area 2305 of the RAM 230 (S163). More specifically, in the example of FIG. 11, the data of sheets having sheet numbers 1 and 2 is respectively acquired from the document storage area 2301 and stored into the print-target-sheet storage area 2306. Further, a value 2 is stored as the number of print target sheets in the number-of-print-target-sheets storage area 2305. Subsequently, the print option information is set by selecting any one of the check boxes in the print option setting box 1813, and is stored into the print option storage area 2308 of the RAM 230 (S164). More specifically, in the example of FIG. 11, the data that corresponds to "PRINT IF POSSIBLE" is stored. Further, the number of copies, which is set each time a numeral is specified in the number-of-copies setting box 184, is stored into the number-of-copies storage area 2309 of the RAM 230 (S165). More specifically, in the example of FIG. 11, the set number of copies, 2, is stored.

When all the settings for printing conditions are thus established and stored into the predetermined storage areas 2301-2309 of the RAM 230, respectively, the CPU 210 determines whether printing is instructed based on whether the mouse 282 is clicked on the print button 185 on the print setting screen 180 (S166). If the mouse 282 is clicked on the print button 185 (YES at S166), the CPU 210 performs the print control processing, which will be described later (S167), to cause the connected printer to perform printing. Subsequently, the CPU 210 returns to the determination as to whether it is instructed to specify settings of the printer or the printer sheet (S151). On the other hand, if the mouse 282 is not clicked on the print button 185 (NO at S166), the CPU 210 repeat determination as to whether it is instructed to print until the mouse 282 is clicked on the cancel button 186 or an "x" button at the upper right corner of the screen (NO at S168, S166). If the mouse 282 is clicked on the cancel button 186 or the "x" button at the upper right corner of the screen (YES at S168), the CPU 210 cancels all the settings established on the print setting screen 180, and returns to the determination as to whether it is instructed to specify settings of the printer or the printer sheet.

After selecting the sheet (S150), if "PRINTER/PRINTER SHEET SETTING" is not selected (NO at S151) and "PRINT" is not selected either (NO at S161) in the menu, the CPU 210 determines whether it is instructed to perform any other processing (S171). If it is instructed to perform any other processing (YES at S171), the CPU 210 performs the processing that corresponds to the instruction (S172) . For example, if an editing operation is instructed via the mouse 282 in the work area 150 (see FIG. 8) on the aforementioned edit screen 2710, processing that corresponds to the entered instruction is performed. The editing operation may be, for example, adding or deleting a character to or from a displayed sheet 140, decorating the character, or scaling up or down the character. Further, if the sheet change button 136 is manipulated to change the edit target sheet, the CPU 210 overwrites the data of the corresponding sheet in the document storage area 2301 with data of the current edit target sheet stored in the edit-target-sheet storage area 2302 at this time. Moreover, the CPU 210 acquires the data of the newly selected edit target sheet from the document storage are 2301 and stores the data into the edit-target-sheet storage area 2302 instead, and switches the edit target sheet displayed on the work area 150. After the other processing is performed (S172), the CPU 210 returns to the determination as to whether it is instructed to specify the settings of the printer or the printer sheet (S151).

If no other processing is instructed (NO at S71) and ending of the processing is instructed (YES at S181), the CPU 210 ends the processing of FIG. 7. Specifically, if "END" is selected in the menu or the mouse 282 is clicked on the "x" button at the upper right corner on the edit screen 2710 (see FIG. 8), the CPU 210 determines that it is instructed to end the processing (YES at S181) and ends the data editing processing shown in FIG. 7. If it is not instructed to end the processing (NO at S181), the process returns to the determination as to whether it is instructed to specify the settings of the printer the printer sheet (S151).

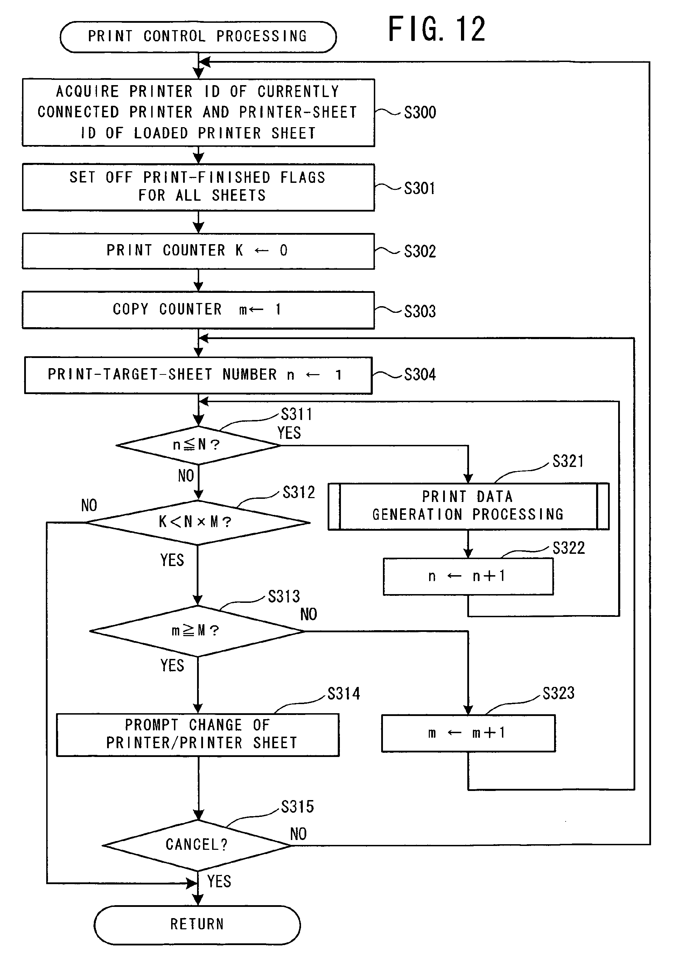

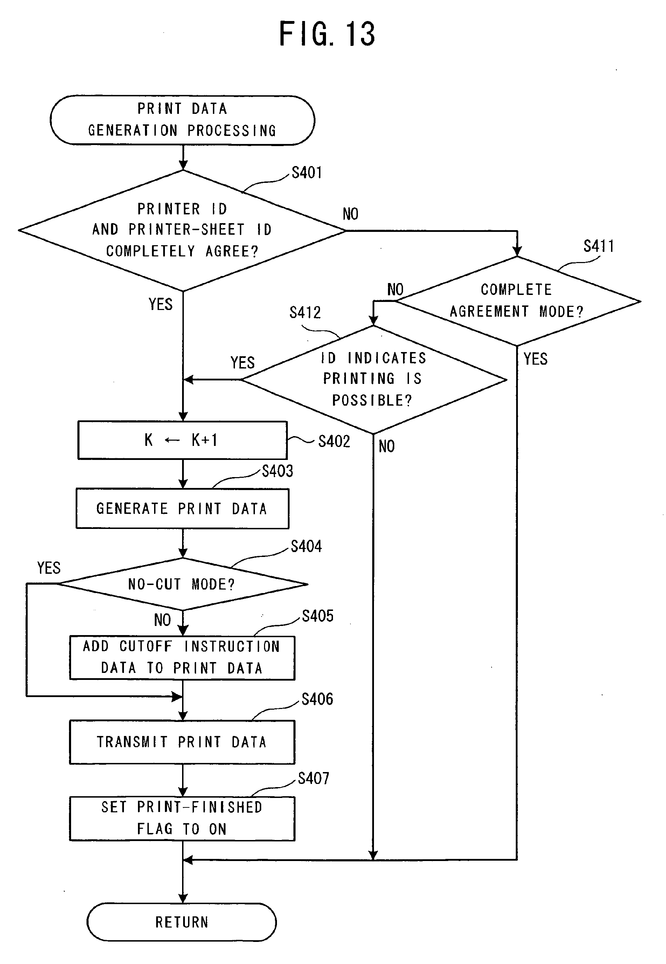

Next, the print control processing (S167) that is performed if printing is instructed in the data editing processing shown in FIG. 7 will be described below with reference to FIGS. 12-13. The print control processing shown in FIGS. 12 and 13 is performed by the CPU 210 in accordance with a program stored in the program storage area 2501 of the HDD 250.

When the print control processing shown in FIG. 12 is started, the CPU 210 acquires the printer ID of a connected printer that is currently connected to the PC 200 and the loaded printer-sheet ID of the printer sheet currently loaded in the connected printer. The acquired connected printer ID and loaded printer-sheet ID are stored into the connected printer storage area 2310 and the loaded printer sheet storage area 2311 of the RAM 230, respectively (S300). The present embodiment is described on the assumption that the connected printer is the tape printing apparatus 1. Therefore, at S300, a printer ID that corresponds to the tape printing apparatus 1 is stored as the connected printer ID in the connected printer storage area 2310. Further, a tape width of the label tape 300 of the tape cassette 350 loaded in the tape printing apparatus 1 is detected by the tape-type detection switch 65. Accordingly, the printer-sheet ID that corresponds to the detected tape width is stored as the loaded printer-sheet ID in the loaded printer sheet storage area 2311.

Then, the CPU 210 stores corresponding print-finished flags as OFF for all of the print target sheets stored in the print-target-sheet storage area 2306 of the RAM 230 (S301) . The CPU 210 sets to 0 the print counter value K stored in the print counter storage area 2314 (S302) . The CPU 210 also sets to 1 the copy counter value m stored in the copy counter storage area 2315 of the RAM 230 (S303) . The CPU 210 sets to 1 the sheet counter value n stored in the sheet counter storage area 2316. Also, the CPU 210 extracts the n'th print target sheet (the first print target sheet in the first processing) out of the print target sheets stored in the print-target-sheet storage area 2306, and stores the n'th print target sheet as the processing target sheet into the processing-target-sheet storage area 2312 (S304). Next, the CPU 210 determines whether the sheet counter value n is equal to or less than a number of print target sheets N stored in the number-of-print-target-sheets storage area 2305 (S311). If the sheet counter value n is equal to or less than the number of print target sheets N (YES at S311), the sheet having the print target sheet number n has not been through print data generation processing yet. Accordingly, the process advances to the print data generation processing shown in FIG. 13 (S321).

The print data generation processing, which is performed at S321 of FIG. 12, will be described below with reference to FIG. 13. Following the start of the print data generation processing, the CPU 210 refers to the data stored in the printer setting storage area 2303, the printer-sheet setting storage area 2304, a connected printer storage area 2310, and the loaded printer sheet storage area 2311 of the RAM 230. Then, the CPU 210 determines whether the printer ID and the printer-sheet ID that are set for the n'th sheet currently processed completely agree with the connected printer ID and the loaded printer-sheet ID, respectively (S401). If at least one of the printer ID and the set printer-sheet ID of the n'th sheet do not agree with the connected printer ID and the loaded printer-sheet ID (NO at S401), the CPU 210 refers to the print option information stored in the print option storage area 2308. It is then determined whether a complete agreement mode is set, in order to determine whether the processing should be continued (S411). Specifically, if "PRINT IF AGREES WITH SETTING" has been selected in the print option setting box 183 on the aforementioned print setting screen 180 (see FIG. 11), the stored print option information indicates the complete agreement mode (YES at S411). In such a case, the CPU 210 returns to the processing of FIG. 12 without generating print data. On the other hand, if "PRINT IF POSSIBLE" is selected as shown in the example of FIG. 11, the complete agreement mode is not set (NO at S411). In such a case, the CPU 210 refers to the corresponding information storage area 2503 of the HDD 250. It is then determined whether the printer-sheet ID set for the n'th print target sheet indicates that printing is possible on the label tape 300 of a tape cassette 350 loaded in the currently connected tape printing apparatus 1 (S412). Specifically, the CPU 210 reads the data stored in the corresponding information storage area 2503 of the HDD 250. It is then determined whether the printer-sheet ID set for the n'th print target sheet is stored in the corresponding information storage area 2503 as that of a size corresponding to the loaded printer-sheet ID. If the printer-sheet ID set for the n'th print target sheet is stored, it is determined that printing is possible (YES at S412). If not, it is determined that printing is impossible (NO at S412) . If it is determined that printing is impossible (NO at S412), the CPU 210 returns to the processing of FIG. 12 without generating print data.

If it is determined that the printer ID and the printer-sheet ID that are set for the processing target sheet (n'th print target sheet) completely agree with the connected printer ID and the loaded printer-sheet ID, respectively (YES at S401), printing on the n'th print target sheet is to be performed. In addition, although the printer ID and the printer-sheet ID that are set for the n'th print target sheet completely agree with the connected printer ID and the loaded printer-sheet ID, if the complete agreement mode is not set and it is determined that printing is possible (YES at S412), printing the n'th print target sheet is to be performed. Accordingly, the print counter value K stored in the print counter storage area 2314 of RAM 230 is incremented by 1 (S402). Subsequently, the print data is generated by a known method for the n'th print target sheet stored in the processing-target-sheet storage area 2312 and stored into the print data storage area 2313 (5403) . Then, the CPU 210 determines whether the cut option information stored in the cut option storage area 2307 indicates a no-cut mode (S404). The no-cut mode corresponds to a case where only "PRINT WITHOUT FULL-CUT" has been selected in the cut option list box 1812 in the printer setting box 181 on the aforementioned print setting screen 180 (see FIG. 11). In such a case (YES at S404), there is no need for cutoff instruction data indicating a cutoff of the label tape 300. Therefore, the CPU 210 directly transmits the print data of the n'th print target sheet stored in the print data storage area 2313 to the tape printing apparatus 1 via the USB cable 10 (S406). On the other hand, if the information does not indicate the no-cut mode (NO at S404), the CPU 210 generates the cutoff instruction data based on the cut option information stored in the cut option storage area 2307. The generated cutoff instruction data is added to the print data of the n'th print target sheet generated at S403 and stored in the print data storage area 2313 (S405). A case where "AUTOMATIC CUT" and "HALF CUT" are selected as shown in the example of FIG. 11 will be described below as an example. In the case where the sheet number n of the processing target sheet is less than the number of print target sheets N, it is determined that the n'th print target sheet is not the last one to be printed. Therefore, the cutoff instruction data is added to cause the tape printing apparatus 1 to feed the label tape 300 by a predetermined distance after printing the n'th sheet and cut off (half cut) only the print tape with the tape cutter 17 (see FIG. 5). If n is equal to or greater than N, it is determined that the n'th print target sheet is the last one to be printed, that is, n'th print target sheet is at the end of the document. Therefore, the cutoff instruction data is added to cause the tape printing apparatus 1 to feed the label tape 300 by the predetermined distance and cut off (full cut) both of the print tape and the separation tape with the tape cutter 17 (see FIG. 5). The CPU 210 transmits to the tape printing apparatus 1 the print data to which the cutoff instruction data is added (S406) . After transmitting the print data, the CPU 210 sets to ON the print-finished flag stored corresponding to the n'th print target sheet in the print-target-sheet storage area 2306 (S407), and returns to the processing of FIG. 12.

The CPU 210 adds 1 to the processing target sheet number n of the sheet counter stored in the sheet counter storage area 2316 (s322) and returns to S311 again, to determine whether the processing target sheet number n is equal to or less than the number of print target sheets N. If the number n of the processing target sheet is equal to or less than the number of print target sheets N (YES at S311), there remains a print target sheet that has not been processed yet, so that the aforementioned processing of S321-S322 is repeated. If the sheet number n of the processing target sheet becomes greater than the number of print target sheets N (NO at S311), it is determined that printing of one copy has been finished for all the print target sheets that can be printed with the currently connected printer and the currently loaded printer sheet. Therefore, the CPU 210 determines whether printing has been completed, considering the number of copies and a possibility that the print data has not been generated for some print target sheet in the previous print data generation processing (S321) . Specifically, the CPU 210 refers to the number-of-print-target-sheets storage area 2305 and the number-of-copies storage area 2309, to determine whether a value of the number of print target sheets N multiplied by the number of copies M (N x M) is greater than a value of print counter K (5312). The value of the number of print target sheets N multiplied by the number of copies M corresponds to a total number of sheets that are to be printed under the currently set conditions. For example, when the number of print target sheets is 2 and the number of copies is 2, as in the example of FIG. 11, it means that four (2 x 2) sheets are to be printed. Accordingly, when the value of the print counter K reaches four, it can be determined that printing has been completed. Therefore, if the print counter K is at least the value of the number of print target sheets N multiplied by the number of copies M (N x M) (NO at S312), the CPU 210 ends the print control processing of FIG. 12 and returns to the data editing processing of FIG. 7.

On the other hand, if the value of the number of print target sheets N multiplied by the number of copies M is greater than the value of the print counter K (YES at S312), it indicates that printing has not been completed as much as the set number of copies, or the print data has not been generated for some of the print target sheets in the previous print data generation processing (S321). Therefore, the CPU 201 determines whether the value of the copy counter m stored in the copy counter storage area 2315 is equal to or greater than the number of copies M stored in the number-of-copies storage area 2309 (S313). If the value of the copy counter m is less than the number of copies M (NO at S313), it is determined that printing has not yet been completed as much as the set number of copies. Therefore, the CPU 210 adds 1 to the copy counter m stored in the copy counter storage area 2315 (S323), returns to S304, and sets to 1 again the sheet counter n stored in the sheet counter storage area 2316, and the above processing is repeated. Also in the repeated processing, as described above, only sheets that can be printed with the currently connected printer and the currently loaded printer sheet will be printed. If the value of the copy counter m is equal to or greater than the number of copies M (YES at S313), the CPU 210 displays on the monitor 271 a message that prompts a change of the printer or the printer sheet (S314), so that processing can be continued on the print target sheets for which print data has not been generated in the print data generation processing (S321). Specifically, the CPU 210 refers to the print-target-sheet storage area 2306 to extract out of the stored print target sheets the first print target sheet that has the print-finished flag still set to OFF. Then, for example, the CPU 210 may cause the monitor 271 to display a printer name and a printer sheet size that correspond to the printer ID and the printer-sheet ID set for the extracted print target sheet, and a message like "CHANGE PRINTER AND PRINTER SHEET AS DISPLAYED" etc. Subsequently, if printing is canceled with a cancel button (not shown) displayed on the monitor 271 together with the message (YES at S315), the CPU 210 ends the processing. If printing is not canceled and, instead, instructed to continue with a print continue button (not shown) displayed on the monitor 271 (NO at S315), the CPU 210 returns to S300 again and acquires the connected printer ID and the loaded sheet ID at this time and the above processing is repeated. When the processing is repeated and the print counter K finally becomes equal to or greater than the value of the number of print target sheets N multiplied by the number of copies M (N x M) (NO at S312), it indicates that printing has been completed. Accordingly, the CPU 210 ends the print control processing of FIG. 12 and returns to the data editing processing of FIG. 7.

When the tape printing apparatus 1 receives the print data transmitted from the PC 200, the CPU 52 of the tape printing apparatus 1 stores the received print data into the RAM 60. Then, the CPU 52 reads pieces of the print data sequentially and, in accordance with the print data, drives the drive circuits 48 and 49 respectively connected to the thermal head 13 and the tape feed motor 47 to perform printing with the thermal head 13 while feeding the label tape 300. If the cutoff instruction data is included in the print data, the CPU 52 further feeds the printed label tape 300 in accordance with the cutoff instruction data. Further, the CPU 52 drives the drive circuit 42 to cut off the label tape 300 with the tape cutter 17 by an instructed method (for example, half-cut).

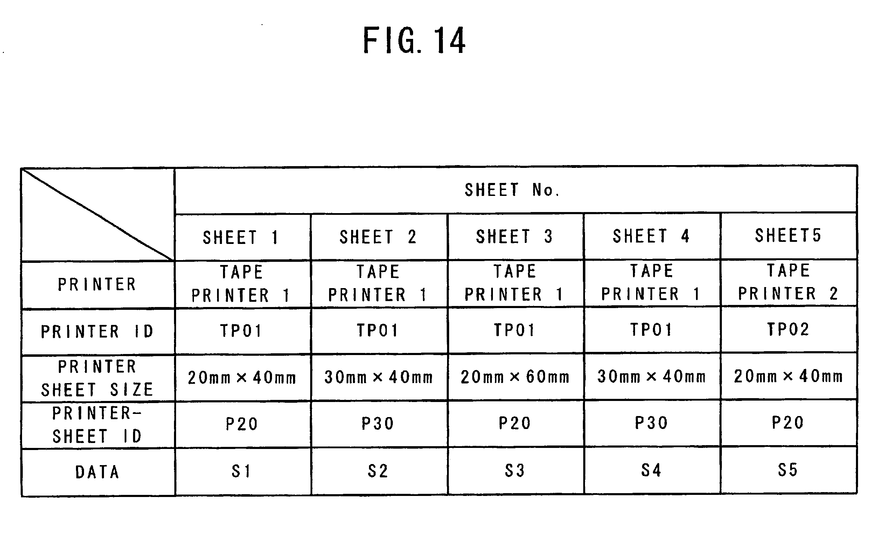

With reference to FIGS. 14-16, how the above-described print control processing (FIGS. 12 and 13) is performed, for example, on five print target sheets, will be described, in a case where the printer sheet settings including a different printer sheet size are specified for some of the print target sheets.

It is supposed that settings of the printer and the printer sheet such as show in FIG. 14 are specified in the above-described data editing processing (S153 and S155 in FIG. 7). Specifically, it is supposed that the same printing apparatus 1, that is, "TAPE PRINTER1", is specified for all of sheet 1 through sheet 4 on the printer setting screen 161 of FIG. 9. As a result, printer ID "TP01" that identifies "TAPE PRINTER1" is stored in the printer setting storage area 2303 of the RAM 230 corresponding to each of sheet numbers 1-4. For sheet 5, "TAPE PRINTER2", which is of the same type as "TAPE PRINTER1", is specified as the output-destination printer and so the printer ID "TP02" is stored together with sheet number 5 in the printer setting storage area 2303. Further, the printer sheet size of sheets 1 and 5 is each set to a tape having a width of 20mm and a length of 40mm on the printer sheet setting screen 162 of FIG. 10. The printer sheet size of sheet 3 is set to a tape having a width of 20mm and a length of 60mm. The printer sheet size of sheets 2 and 4 is each set to a tape having a width of 30mm and a length of 40mm. Accordingly, "P20" is stored as the printer-sheet ID corresponding to sheets 1, 3, and 5, and "P30" is stored as the printer-sheet ID corresponding to sheets 2 and 4 in the printer-sheet setting storage area 2304 of the RAM 230. Sheets 1 and 5 and sheet 3 have different length settings but have the same printer-sheet ID, because the same printer-sheet ID is used as far as the tape width is the same in the case of the tape printing apparatus 1, in which the length is adjusted by simply cutting off the tape. Further, the respective data pieces S1-S5 corresponding to sheets 1-5 are stored in the print-target-sheet storage area 2306. Moreover, in this example, it is supposed that the following settings are specified in advance. "HALF CUT" and "AUTOMATIC CUT" are selected (S162) and all of the five sheets (sheets 1-5) constituting the document are selected as the print target sheets (S163) on the print setting screen 180 of FIG. 11. "PRINT IF POSSIBLE" is selected as the print option (S164) and 2 is selected as the number of copies to be printed (S165). Those settings are all stored in the aforementioned predetermined storage areas of the RAM 230, respectively. Further, "TAPE PRINTER1", which is the tape printing apparatus 1, is currently connected to the PC 200. The label tape 300 in the tape cassette 350 loaded in "TAPE PRINTER1" has a width of 20mm.

If printing is instructed for print target sheets 1-5 of FIG. 14 (YES at S166 of FIG. 7) and the print control processing shown in FIG. 12 is started, the CPU 210 detects "TAPE PRINTER1" that is currently connected to PC 200 and the 20mm-wide label tape 300 that is currently loaded in the "TAPE PRINTER1". The respective IDs, that is, the connected printer ID of "TP01" and the loaded printer-sheet ID of "P20" are respectively stored in the connected printer storage area 2310 and the loaded printer sheet storage area 2311 of the RAM 230 (S300). Then, the print counter K is set to 0 and the copy counter m and the sheet counter n are each set to 1 (S302, S303). Comparison between the print target sheet counter n=1 and the number of print target sheets N=5 proves that n is not greater than N (YES at S311), so that the CPU 210 advances to the print data generation processing (S321 of FIG. 13). The CPU 210 respectively compares the connected printer ID of "TP01" and the loaded printer-sheet ID of "P20" with the printer ID "TP01" and the printer-sheet ID "P20" set for sheet 1 (see FIG. 14), which is the first print target sheet. It is determined that the respective IDs agree with each other (YES at S401). Therefore, the print counter K is incremented by 1 to become 1 (S402) and the print data is generated based on the data "S1" of sheet 1. (S403). The CPU 210 refers to the cut option storage area 2307. Because sheet 1 is not the last print target sheet, the CPU 210 generates the cutoff instruction data for half-cutting the label tape 300 after sheet 1 is printed in accordance with S1, and adds the generated cutoff instruction data to the print data (S405). The print data with the cutoff instruction data added is transmitted to "TAPE PRINTER1" (S406). Then, the CPU 210 sets to ON the print-finished flag for sheet 1 stored in the print-target-sheet storage area 2306 and returns to the processing of FIG. 12.

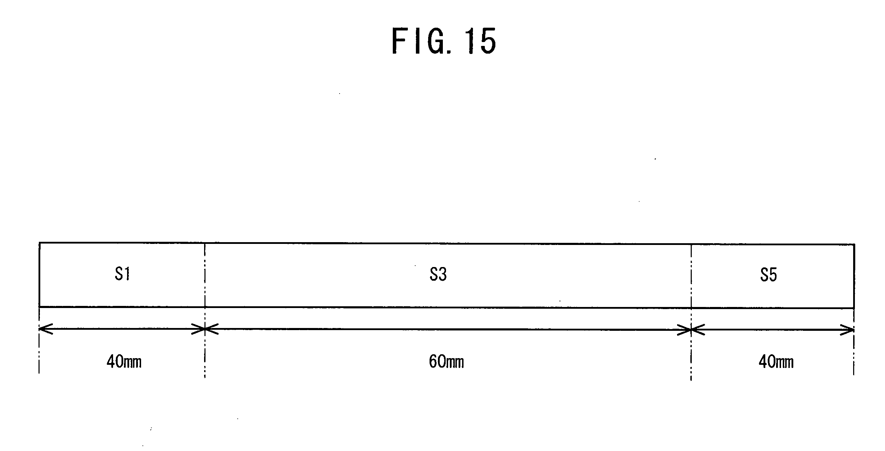

Since processing is finished on the print target sheet having the sheet number 1, the sheet counter n is incremented by 1 (n=2) (5322). Comparison between n=2 and the number of print target sheets N=5 proves that n is still less than N (YES at S311), so that the CPU 210 advances to the print data generation processing (S321 of FIG. 13). Because the printer ID set for sheet 2 (see FIG. 14) is "TP01", the printer ID agrees with the connected printer ID of "TP01". However, the printer-sheet ID set for sheet 2 is "P30", so that the printer-sheet ID does not agree with the loaded printer-sheet ID of "P20" (NO at S401). Referring to the print option storage area 2308 proves that the print-if-possible mode, not the complete agreement mode, is set (NO at S411). Therefore, the CPU 210 reads data stored in the corresponding information storage area 2503 of the HDD 250, to determine whether the printer-sheet ID set for sheet 2 indicates that sheet 2 can be printed on a 20mm-wide tape loaded in "TAPE PRINTER1" (S412). Specifically, the determination is made based on whether the printer-sheet ID of sheet 2, that is, "P30" is included in the usable-size printer-sheet IDs that correspond to the loaded printer-sheet ID of "P20" stored in the corresponding information storage area 2503. It is supposed that the corresponding information storage area 2503 stores "P20" that stands for a 20mm-wide tape, "P15" that stands for a 15mm-wide tape, and "P10" that stands for a 10mm-wide tape as the usable-size printer-sheet IDs that correspond the printer ID "P20". Therefore, the CPU 210 determines that sheet 2 cannot be printed on the 20mm-wide tape loaded in "TAPE PRINTER1" (NO at S412) and returns to the processing of FIG. 12 without generating the print data. Similarly, the CPU 210 completes the processing of S311, S321, and S322 in this order on sheets 3 and 4 and then makes the determination as to sheet 5 in S401. The printer ID set for sheet 5 is "TP02" and it does not agree with the connected printer ID of "TP01" (NO at S401) . However, the printer-sheet ID for sheet 5 is "P20" and stored as one of the usable-size printer-sheet IDs that correspond to the loaded printer-sheet ID of "P20" stored in the corresponding information storage area 2503. Therefore, the CPU 210 determines that printing is possible (YES at S412) and then generates the print data. Through such processing, for sheets 1 and 3, for which the connected printer ID and the loaded printer-sheet ID respectively agree with the printer ID and the printer-sheet ID set for the sheet, and for sheet 5, which can be printed, the print data can be generated sequentially. The generated print data is then transmitted to "TAPE PRINTER1", which is the tape printing apparatus 1 (S403-S406). Then, the data pieces S1, S3, and S5 that respectively correspond to sheets 1, 3, and 5 can be printed in this order by "TAPE PRINTER1" as shown in FIG. 15. Further, in accordance with the cutoff instruction data added to the print data, half-cutting can be performed between sheets 1 and 3 and between sheets 3 and 5 and, full-cutting can be performed at the end of sheet 5.

When the print data generation processing for sheet 5 is completed (S321) and the sheet number n of the processing target is incremented by 1 (S322), the sheet number n of the processing target becomes 6. At this time, the number of sheets N is 5 and exceeded by the sheet number n=6, so that the CPU 210 determines that n is not equal to or less than N (NO at S311). Therefore, the CPU 210 determines whether the value of the print counter K is less than the value of the number of print target sheets N multiplied by the number of copies M (N x M) (S312) . In this example, sheets 1, 3, and 5 have been printed in the aforementioned print data generation processing (S321) , so that the value of the print counter K is 3. Therefore, it is determined that the K value of 3 is less than the value of the number of print target sheets N multiplied by the number of copies M, 10 (N x M = 5 x 2 = 10) (S312) . Next, comparison between the copy counter m and the number of copies M proves that m is not equal to or greater than M, because the copy counter m is 1 and the number of copies M is 2 (S313). The CPU 210 adds 1 to the copy counter m so that m becomes 2 (S323), and returns to S304 to repeat the processing of S311 and the subsequent processing again. Also in this processing, similar to the above-described processing, the print data is generated for sheets 1, 3, and 5 (S403-S405 of FIG. 13), and then transmitted to "TAPE PRINTER1" (S406) to obtain the results of printing as shown in FIG. 15. That is, printing of two copies can be thus completed for each of sheets 1, 3, and 5.

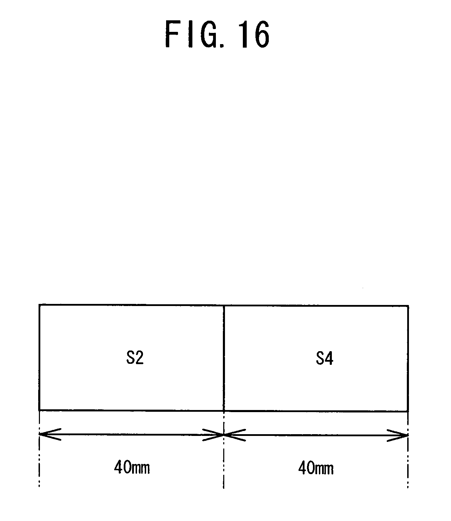

When the CPU 210 then makes the determination in S312, the value of the print counter K is 6 and so it is determined that K is still less than the value of the number of print target sheets N multiplied by the number of copies M, 10 (N x M = 5 x 2 = 10) (YES at S312) . In S313, the copy counter m is 2 and the number of copies M has reached 2 (M=2), so that the CPU 210 determines that m is equal to or greater than M (YES at S313). In this example, referring to the print-target-sheet storage area 2306, the CPU 210 finds that out of the stored print target sheets, sheets 2 and 4 have the print-finished flag set to OFF. Therefore, based on the printer ID and the printer-sheet ID set for sheet 2, which is stored before sheet 4, the CPU 210 causes the monitor 271 to displays a message, which says, for example, "TAPE PRINTER1 and a 30mm-wide tape are necessary to continue printing. Please replace" (S314). In accordance with this message, the user can replace the tape cassette 350 in the TAPE PRINTER1 connected to the PC 200 with a tape cassette having the 30mm-wide label tape 300. Then, if the user selects the print-continue button (not shown) displayed on the monitor 271 (NO at S315), the CPU 210 detects the currently connected printer "TAPE PRINTER1" and the currently loaded label tape 300 having the 30mm-wide tape. Then, the CPU 210 stores the connected printer ID of "TP01" and the loaded printer-sheet ID of "P30" into the connected printer storage area 2310 and the loaded printer sheet storage area 2311 of the RAM 230, respectively (S300). Subsequently, as the above-described processing is repeated, the print data can be generated for sheets 2 and 4 (see FIG. 14) for which the connected printer ID of "TP01" and the loaded printer-sheet ID of "P30" agree with the preset printer ID and printer-sheet ID, respectively (S403-S405) . The generated print data can be then transmitted to "TAPE PRINTER1", which is the tape printing apparatus 1 (S406). As a result, the TAPE PRINTER1 prints out two copies of each of data pieces S2 and S4 that correspond to sheets 2 and 4 in this order as shown in FIG. 16. Further, in accordance with the cutoff instruction data added to the print data, half-cutting is performed between sheets 2 and 4, and full-cutting is performed at the end of sheet 4.

As described above, by the PC 200 according to the present embodiment, in printing a document composed of sheets (independent edit areas) having different printer sheet size settings, it is possible to successively print only the sheets having the same printer sheet size. Therefore, the present embodiment enables reduction of the number of times of replacement of the printer sheet as compared with a case where it is necessary to replace the printer sheet each time the next sheet to be printed has a different printer sheet size setting from the current sheet. Further, the present embodiment preferentially prints the sheets having printer sheet settings that agree with the size of the printer sheet loaded in the printer connected to the PC 200, thereby enabling printing in a more efficient order. Further, if it becomes impossible to continue printing with the printer sheet loaded in the connected printer, the monitor 271 displays a printer that should be connected or a printer sheet that should be loaded. Therefore, the user can continue printing by changing the connected printer or replacing the loaded printer sheet at an appropriate timing. Moreover, even if the sheet settings do not agree with the currently connected printer or the currently loaded print target sheet, printing can be performed as far as printing is possible with the currently connected printer or the currently loaded print target sheet, thereby enables further reduction of the number of times of replacement of the printer sheet.

Further, when printing is performed on the label tape 300 with the tape printing apparatus 1, the sheets included in the same document may have considerable relevance to each other, so that the user may wish to handle these sheets as a unit in many cases. Therefore, by printing a plurality of sheets successively on one tape, management and distribution of the sheets as a unit can be made easier, for example. In addition, in the present embodiment, a plurality of cutoff methods is available, such as full-cutting and half-cutting between the sheets, and so an individual label can be created for each of the sheets, thereby user-friendliness can be improved. Moreover, a desired cutoff method can be specified when printing a plurality of copies of one document.

Further, the user can specify settings, such as a desired output-destination printer and a printer sheet size for each of the sheets, a cutoff method to be employed between the sheets or after one copy of a document is printed, etc. depending on a situation. It is also possible to specify only some of a plurality of sheets constituting a document as sheets to be actually printed. Therefore, the wide range of needs from the user can be accommodated.

The above embodiment is illustrative and, of course, can be modified variously. For example, although the tape printing apparatus 1 is described as one example of a printing apparatus in the above embodiment, the tape printing apparatus 1 may be replaced by a laser printer or an ink jet printer, which perform printing on a printer sheet having a prescribed size such as an A4, B4, or A3 size. In such a case, if, for example, A4 and A3 sizes are mixed in the printer sheet size settings set for each sheet, for example, only those sheets for which the A4 size is set may as well be printed preferentially. In the case of a printer that automatically selects a sheet cassette from among a plurality of sheet cassettes loaded in the printer, the A3-size printer sheet cassette might as well be used next to successively print only the sheets for which the A3 size is set. In a printer in which a sheet cassette is not automatically selected, similar to the above-described embodiment, it is possible to cause the PC 200 to display on it a message that prompts replacement of a printer sheet.

Although the above embodiment is configured to first detect a printer that is connected to the PC 200 and a printer sheet that is loaded in the printer respectively, and then preferentially print only sheets that agree with them successively, the following configuration may be employed. That is, the printer ID and the printer-sheet ID set for a sheet stored may be read first, and then a printer name and a printer sheet corresponding to the read IDs may be displayed on the monitor 271 or the like, thus prompting setting such printer and printer sheet. Instead of by displaying a message on the monitor 271, the user may be prompted by any other various methods such as notification by means of a voice.

In the above-described embodiment, the tape cassette 350 loaded in the tape printing apparatus 1 is equipped with the label tape 300 that has a print tape and a separation tape laminated on each other beforehand. However, such a type of tape cassette may be employed as to have a print tape and a separation tape wound around different spools and stick them together therein as printing goes on. Further, instead of a double-layered structure, a single-layered structure may be employed. In such a case, half-cutting is not performed.

In the above embodiment, the printer-sheet ID is described as identification information that identifies only a printer sheet size. However, any other information that identifies a printer sheet material such as plain paper, laminated paper, and plastic film, for example, may be used.

In the above embodiment, an edit area is referred to as a "sheet". However, the name for the edit area is not limited to the "sheet". Any other name, such as a "page" or "layout", may be used for the edit area as far as the name stands for an area that can be edited and the print settings can be specified independently from each other.

In the above embodiment, the CPU 210 implements the functionalities of a print medium setting acquisition device, a print control device, a first print medium setting acquisition device, a print medium notification device, a print medium information acquisition device, a replacement notification device, a print medium setting device, a printer setting acquisition device, a printer information acquisition device, a printer change notification device, a printer setting device, an inter-area cutting setting acquisition device, an inter-area cutting setting device, a document-end cut setting acquisition device, a document-end cut setting device, and a print target specification device. However, these devices may be implemented by separate devices, respectively, or may be implemented by specialized or general-purpose hardware implementing any combination of the functionalities of these devices.

## Claims

1. A print control apparatus (200) that is connectable to a printing apparatus (1) having a printing device (13) adapted to print characters on a print medium (300) and that is adapted to control printing operations of the printing apparatus (1), the print control apparatus (200) comprising:
a print medium setting acquisition device (210) that is adapted to acquire print medium setting information, the print medium setting information being identification information set for each of a plurality of edit areas and identifying a print medium (300) on which each of the plurality of edit areas is to be printed, the plurality of edit areas constituting a document; and
a print control device (210) that is adapted to control the printing device (13) to successively print same-setting edit areas, the same-setting edit areas being edit areas for which the print medium setting information acquired by the print medium setting acquisition device (210) is set the same.

2. The print control apparatus (200) according to claim 1, further comprising a first print medium setting acquisition device (210) that is adapted to acquire first print medium setting information, the first print medium setting information being the print medium setting information set for an edit area to be printed first of the plurality of edit areas,
wherein the print control device (210) controls the printing device (13) to successively and preferentially print the same-setting edit areas for which the print medium setting information is set the same as the first print medium setting information acquired by the first print medium setting acquisition device (210).

3. The print control apparatus (200) according to claim 2, further comprising a print medium notification device (210) that is adapted to notify of the print medium (300) identified by the first print medium setting information acquired by the first print medium setting acquisition device (210).

4. The print control apparatus (200) according to claim 2 or 3, wherein the print control device (210) is adapted to control the printing device (13) to successively and preferentially print the same-setting edit areas for which the print medium setting information is set the same as the first print medium setting information and an edit area for which the print medium setting information indicating that printing can be performed on the print medium (300) identified by the first print medium setting information is set.

5. The print control apparatus (200) according to any of claims 1 to 4, further comprising a print medium information acquisition device (210) that is adapted to acquire print medium identification information, the print medium identification information being identification information assigned to a print medium (300) loaded in the printing apparatus (1),
wherein the print control device (210) is adapted to control the printing device (13) to successively and preferentially print the same-setting edit areas for which the print medium setting information is set the same as the print medium identification information acquired by the print medium information acquisition device.

6. The print control apparatus (200) according to claim 5, further comprising a replacement notification device (210) that is adapted to notify of a prompt for replacing the print medium (300) loaded in the printing apparatus (1) with another print medium identified by the print medium setting information set for a different edit area immediately before the different edit area is printed, the different edit area being an edit area for which the print medium setting information is set as different from the print medium identification information acquired by the print medium information acquisition device (210).

7. The print control apparatus (200) according to claim 5 or 6, wherein the print control device (210) is adapted to control the printing device (13) to successively and preferentially print the same-setting edit areas for which the print medium setting information is set the same as the print medium identification information and an edit area for which the print medium setting information indicating that printing can be performed on the print medium (300) identified by the print medium identification information is set.

8. The print control apparatus (200) according to any of claims 1 to 7, further comprising a print medium setting device (210) that is adapted to set the print medium setting information for each of the plurality of edit areas.

9. The print control apparatus (200) according to any of claims 1 to 8, further comprising:
a printer setting acquisition device (210) that is adapted to acquire printer setting information, the printer setting information being identification information set for each of the plurality of edit areas and identifying the printing apparatus (1) to print each of the plurality of edit areas; and
a printer information acquisition device (210) that is adapted to acquire printer identification information, the printer identification information being identification information assigned to the printing apparatus (1) currently connected,
wherein the print control device (210) is adapted to control the printing device (13) to successively and preferentially print the same-setting edit areas for which the printer setting information is set the same as the printer identification information acquired by the printer information acquisition device (210).

10. The print control apparatus (200) according to claim 9, further comprising a printer change notification device (210) that is adapted to notify of a prompt for replacing the printing apparatus (1) currently connected with another printing apparatus identified by the printer setting information set for a different edit area immediately before the different edit area is printed, the different edit area being an edit area for which the printer setting information is set as different from the printer identification information acquired by the printer information acquisition device (210).

11. The print control apparatus (200) according to claim 9 or 10, further comprising a printer setting device that sets the printer setting information for each of the plurality of edit areas.

12. The print control apparatus (200) according to any of claims 1 to 11, wherein the printing apparatus (1) is a tape printing apparatus that is adapted to print characters on a tape as the print medium (300) with the printing device (13).

13. The print control apparatus (200) according to claim 12, wherein:
the printing apparatus (1) comprises:
a feeding device (16, 39, 22) that is adapted to feed the tape (300) via the printing device (13); and
a cutting device (17) that is adapted to cut off the tape (300) after printing is performed by the printing device (13), and
the print control apparatus (200) further comprises:
an inter-area cut setting acquisition device (210) that is adapted to acquire inter-area cut setting information, the inter-area cut setting information specifying whether to cut the tape (300) between the same-setting edit areas when the same-setting edit areas are successively printed along a feeding direction of the tape (300) and a cutting method to be employed in cutting the tape (300); and
a cutting control device (52) that is adapted to control the cutting device (17) to cut the tape (300) between the same-setting edit areas by the cutting method if the inter-area cut setting information indicates that the tape (300) should be cut by the cutting method, and controls the cutting device (17) to avoid cutting the tape (300) between the same-setting edit areas if the inter-area cut setting information indicates the tape (300) should not be cut.

14. The print control apparatus (200) according to claim 13, wherein:
the tape (300) has a print tape on which the same-setting edit areas are printed and a separation tape stuck to one surface of the print tape via an adhesive layer; and
the cutting method includes a full-cutting method of cutting both of the print tape and the separation tape and a half-cutting method of cutting only the print tape.

15. The print control apparatus (200) according to claim 13 or 14, further comprising an inter-area cut setting device (210) that sets the inter-area cut setting information.

16. The print control apparatus (200) according to any of to claims 13 to 15, further comprising a document-end cut setting acquisition device (210) that is adapted to acquire document-end cut setting information, the document-end cut setting information specifying whether to cut the tape (300) each time the document is printed if a plurality of copies of the document are to be printed,
wherein the cutting control device (52) controls the cutting device (17) to cut the tape (300) after the document is printed if the document-end cut setting information indicates that the tape (300) should be cut, and is adapted to control the cutting device (17) to avoid cutting the tape (300) after the document is printed if the document-end cut setting information indicates that the tape (300) should not be cut.

17. The print control apparatus (200) according to claim 16, further comprising a document-end cut setting device (210) that sets the document-end cut setting information.

18. The print control apparatus (200) according to any of claims 1 to 17, further comprising a print target specification device (210) that specifies edit areas to be printed among the plurality of the edit areas.

19. A computer-readable recording medium (250, 240) that stores a print control program for controlling printing operations of a printing apparatus having a printing device (13) to print characters on a print medium (300), the program comprising:
instructions for acquiring print medium setting information, the print medium setting information being identification information set for each of a plurality of edit areas and identifying a print medium (300) on which each of the plurality of edit areas is to be printed, the plurality of edit areas constituting a document; and
instructions for controlling the printing device (13) to successively print same-setting edit areas, the same-setting edit areas being edit areas for which the acquired print medium setting information is set the same.

20. The recording medium according,to claim 19, wherein the program further comprises instructions for acquiring first print medium setting information, the first print medium setting information being the print medium setting information set for an edit area to be printed first of the plurality of edit areas,
wherein the instructions for controlling the printing device control the printing device to successively and preferentially print the same-setting edit areas for which the print medium setting information is set the same as the acquired first print medium setting information.

21. The recording medium according to claim 20, wherein the program further comprises instructions for notifying of the print medium identified by the acquired first print medium setting information.

22. The recording medium according to claim 20 or 21, wherein the instructions for controlling the printing device control the printing device to successively and preferentially print the same-setting edit areas for which the same the print medium setting information is set the same as the first print medium setting information and an edit area for which the print medium setting information indicating that printing can be performed on the print medium identified by the first print medium setting information is set.

23. The recording medium according to any of claims 19 to 22, wherein the program further comprises instructions for acquiring print medium identification information, the print medium identification information being identification information assigned to the print medium loaded in the printing apparatus,
wherein the instructions for controlling the printing device control the printing device to successively and preferentially print the same-setting edit areas for which the print medium setting information is set the same as the acquired print medium identification information.

24. The recording medium according to claim 23, wherein the program further comprises instructions for notifying of a prompt for replacing the print medium loaded in the printing apparatus with another print medium identified by the print medium setting information set for a different edit area immediately before the different edit area is printed, the different edit area being an edit area for which the print medium setting information is set as different from the acquired print medium identification information.

25. The recording medium according to claim 23 or 24, wherein the instructions for controlling the printing device control the printing device to successively and preferentially print the same-setting edit areas for which the print medium setting information is set the same as the print medium identification information and an edit area for which the print medium setting information indicating that printing can be performed on the print medium identified by the print medium identification information is set.

26. The recording medium according to any of claims 19 to 25, wherein the program further comprises instructions for setting the print medium setting information for each of the plurality of edit areas.

27. The recording medium according to any of claims 19 to 26, wherein the program further comprises:
instructions for acquiring printer setting information, the printer setting information being identification information set for each of the plurality of edit areas and identifying the printing apparatus to print each of the plurality of edit areas; and
instructions for acquiring printer identification information, the printer identification information being identification information assigned to the printing apparatus currently connected,
wherein the instructions for controlling the printing device control the printing device to successively and preferentially print the same-setting edit areas for which the printer setting information is set the same as the acquired printer identification information.

28. The recording medium according to claim 27, wherein the program further comprises instructions for notifying of a prompt for replacing the printing apparatus currently connected with the printing apparatus identified by the printer setting information set to the edit areas immediately before the edit areas are printed to which the printer setting information is set which is different from the printer identification information acquired.

29. The recording medium according to claim 27 or 28, wherein the program further comprises instructions for setting the printer setting information for each of the plurality of edit areas.

30. The recording medium according to any of claims 19 to 29, wherein the printing apparatus (1) is a tape printing apparatus that prints characters on a tape as the print medium (300) with the printing device.

31. The recording medium according to claim 30, wherein:
the printing apparatus (1) comprises:
a feeding device (16, 19, 22) that is adapted to feed the tape (300) via the printing device (13); and
a cutting device (17) that cuts off the tape (300) after printing is performed by the printing device (13), and
the print control program further comprises:
instructions for acquiring inter-area cut setting information, the inter-area cut setting information specifying whether to cut the tape between the same-setting edit areas when the same-setting edit areas are successively and sequentially printed along a feeding direction of the tape and a cutting method to be employed in cutting; and
instructions for controlling the cutting device to cut the tape between the same-setting edit areas by the cutting method if the acquired inter-area cut setting information indicates that the tape should be cut by the cutting method, and controls the cutting device to avoid cutting the tape between the same-setting edit areas if the acquired inter-area cut setting information indicates the tape should not be cut.

32. The recording medium according to claim 31, wherein:
the tape (300) has a print tape on which the same-setting edit areas are printed and a separation tape stuck to one surface of the print tape via an adhesive layer; and
the cutting method includes a full-cutting method of cutting both of the print tape and the separation tape and a half-cutting method of cutting only the print tape.

33. The recording medium according to claim 31 or 32, wherein the program further comprises instructions for setting the inter-area cut setting information.

34. The recording medium according to any of claims 31 to 33, wherein the program further comprises instructions for acquiring document-end cut setting information, the document-end cut setting information specifying whether to cut the tape each time one copy of the document is printed if a plurality of copies of the document are to be printed,
wherein the instructions for controlling the cutting device control the cutting device to cut the tape after the document is printed if the document-end cut setting information indicates that the tape should be cut and avoid cutting the tape after the document is printed if the document-end cut setting information indicates that the tape should not be cut.

35. The recording medium according to claim 34, wherein the program further comprises instructions for setting the document-end cut setting information.

36. The recording medium according to any of claims 19 to 35, wherein the program further comprises instructions for specifying an edit area to be printed among a plurality of the edit areas.
